# EUROPEAN PATENT APPLICATION

(11) **EP 1 868 368 A1**
(43) Date of publication of application: **19.12.2007**
(21) Application number: 06729133.6
(22) Date of filing: 15.03.2006
(51) Int. Cl.: H04N 5/20, H04N 1/405, H04N 5/232

(54) **IMAGE PROCESSOR, IMAGE PROCESSING METHOD, PROGRAM AND RECORDING MEDIUM**

(30) Priority: 15.03.2005 JP 2005072798; 15.03.2005 JP 2005072799
(71) Applicant: OMRON CORPORATION, Kyoto-shi, Kyoto 600-8530 (JP)
(72) Inventor: ANDO, T. C/O OMRON CORP. 801, Minamifudodo-cho, Shimogyo-ku, Kyoto-shi, Kyoto, 6008530 (JP)
(74) Representative: Brykman, Georges
(86) International application number: PCT/JP2006/305112
(87) International publication number: WO 2006/098356

(57) **Abstract**

The present invention relates to an image processing apparatus, an image processing method, an image processing system, a program, and a recording medium which are capable of obtaining an image of a wide dynamic range subjected to brightness compression. The allocation of the number of brightness grayscale steps of an output level signal with respect to the level of an input brightness signal differs for the main area and second brightness area, and the other ranges. For example, the whole number of grayscale steps is divided up and allocated to the brightness range of the main area and the brightness range of the second brightness area and the number of grayscale steps is not allocated to the other ranges. A smaller number of steps than for the brightness range of the main area and the second brightness area is allocated to the brightness range between the main area and second brightness area. In addition, an area constituting the boundary part between the brightness range of the main area and the second area can be set and allocated with a smaller number of steps than for the brightness range of the main area and the second brightness area and a larger number of steps than for the area between the main area and the second brightness area. The present invention can be applied to an image processing apparatus.

## Description

### BACKGROUND OF THE INVENTION

### 1. Field of the Invention

The present invention relates to an image processing apparatus and image processing method, a program, and a recording medium and, more particularly, to an image processing apparatus and image processing method, a program, and a recording medium that are capable of obtaining an image of a wide dynamic range that is easy for the user to identify.

### 2. Description of the Related Art

Conventionally, in cameras that use image pickup devices such as CCD (Charge Coupled Device) image pickup devices (also known as charge coupled image pickup devices or solid state image pickup devices), the incident light amount entering the camera has been kept within a certain range by performing control using the aperture or shutter speed for the sake of the charge accumulation capacity limit and the characteristics thereof. Therefore, it has hitherto not been possible to pick up the whole brightness range of the photographic object when an image is picked up outdoors. Hence, images have previously been picked up over different high-speed and low-speed shutter times by using an electronic shutter function and the resulting image signals of two types undergo signal processing to implement favorable image synthesis in which there is barely any displacement of the main photographic object between the respective images, whereby an image of a wide dynamic range has been obtained (See Japanese Application Laid Open No. 2000-32303, for example).

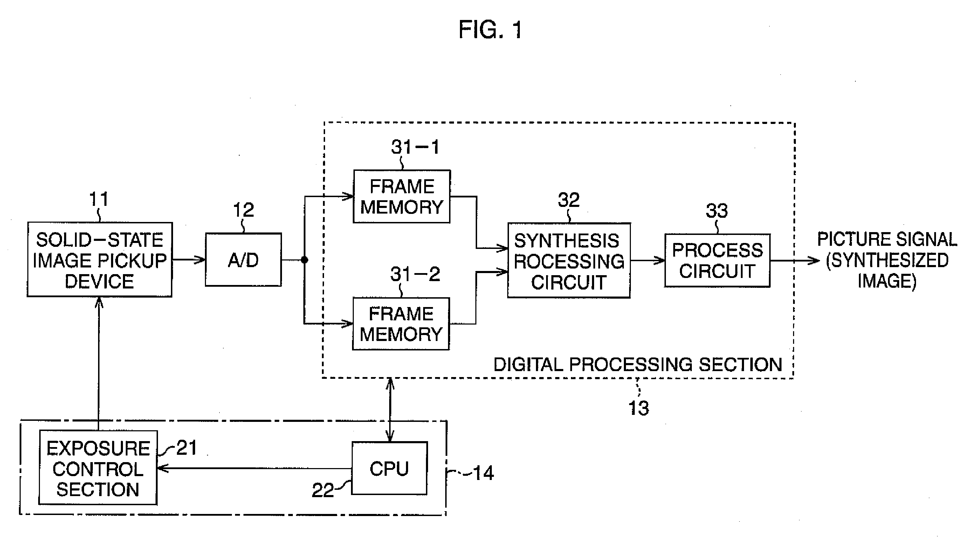

Fig. 1 is a block diagram showing the constitution of a conventional wide dynamic range camera that is capable of obtaining an image of a wide dynamic range through the synthesis of images of different shutter times that are picked up by a CCD.

The solid state image pickup device 11 picks up a high-speed shutter image and a low-speed shutter image on the basis of control of the exposure control section 21 of a control section 14. A low-speed shutter image is, for example, an image with a shutter speed of 1/60 and a high-speed shutter image is, for example, an image with a shutter speed of 1/2000.

The picture signal obtained by a solid-state image pickup device 11, that is, the low-speed shutter image/high-speed shutter image is A/D converted by an A/D converter 12 and is alternately written to a frame memory 31-1 or 31-2 of a digital processing section 13. The signal that is read from the frame memory 31-1 or 31-2 is then supplied to a synthesis processing circuit 32 where it is synthesized before being output via a process circuit 33.

The control unit 14 is constituted by a CPU 22 and exposure control section 21. The CPU 22 performs a calculation by using photometric data that are supplied by the digital processing section 13 and supplies the result to the exposure control section 21 that controls the shutter speed and aperture of the solid-state image pickup device 11 and controls the digital processing section 13 based on the result.

In the case of a wide dynamic range camera such as that shown in Fig. 1, a part with a low photographic object brightness is picked up using a low-speed shutter (the high brightness part is saturated) and a part with a high photographic object brightness is picked up using a high-speed shutter (the low brightness part is dark and cannot be picked up). By synthesizing the two images, an image in which parts of low brightness as well as parts of high brightness of the photographic object are rendered using a single screen can be obtained.

In the case of an image pickup apparatus that employs an image pickup device with a dynamic range that is narrower than that of the human eye such as a CCD, the aperture or shutter speed and so forth must be adjusted so that the intensity of the incident light falls within the dynamic range of the CCD image pickup device.

Therefore, in cases where the range of the intensity of the light of the photographic object exceeds the dynamic range of the CCD image pickup device, brightness clipping in which the pixel values of the pixels of the brightness areas of the photographic object are limited to the maximum value for the pixel values that can be output by the CCD image pickup device and the pixel values of the dark areas of the photographic object are restricted to the minimum value for the pixel values that can be output by the CCD image pickup device occurs. Hence, as mentioned earlier, complex image synthesis processing is required in order to obtain an image of a wide dynamic range.

With a wide dynamic range camera that is constituted by using an image pickup device of a narrow dynamic range such as the aforementioned wide dynamic range camera, not only is complex image synthesis processing required in order to obtain an image of a wide dynamic range but, because a wide dynamic range image of one frame can be obtained by using two images which are a low-speed shutter image and a high-speed shutter image, it is extremely difficult to raise the frame rate.

The present invention was conceived in view of the above circumstances and an object thereof is to obtain an image of a wide dynamic range that is easy for the user to identify without performing complex processing.

### SUMMARY OF THE INVENTION

The image processing apparatus of the present invention comprises acquisition means for acquiring an image signal that is picked up by an image pickup device that outputs pixel values substantially proportional to a logarithm for an incident light amount; brightness range setting means for setting a plurality of brightness ranges in the brightness range of the image signal acquired by the acquisition means; and conversion means for converting the brightness of pixels contained in the image signal acquired by the acquisition means such that the allocation of the number of grayscale steps of the brightness differs for the brightness ranges set by the brightness range setting means and outside the brightness ranges.

The acquisition means are implemented by brightness range setting means or conversion means and dedicated hardware or by a computer or the like that reads a program, where the computer is constituted by a computation device such as, for example, a CPU (Central Processing Unit) or DSP (Digital Signal Processor).

The number of gradation steps is a division number of the brightness grayscales.

The conversion means are able to convert the brightness of the pixels contained in the image signal acquired by the acquisition means so that a greater gradation is allocated to the brightness range than to outside the brightness range.

The brightness range setting means can comprise first average value calculationmeans for calculating the average of the brightness values of the pixels contained in the image signal acquired by the acquisition means; first brightness range setting means for setting a first brightness range based on the average value of the brightness value calculated by the first average value calculation means; and second brightness range determination means for determining a second brightness range in a range that differs from the first brightness range set by the first brightness range setting means.

Accordingly, because a large number of grayscales can be allocated to the main brightness area of the image signal and the other brightness areas that are separate from this brightness, white-out or black blurring can be prevented in the image that is displayed or printed out.

The second brightness range determination means can further comprise second average value calculation means for calculating the average of the brightness values of pixels which have a higher brightness than the first brightness range and which are in a brightness range that differs from the first brightness range set by the first brightness range setting means, wherein the second brightness range determination means is able to determine the second brightness range on the basis of the average value calculated by the second average value calculation means.

Accordingly, because a large number of grayscales can be allocated to the main brightness area of the image signal and to high brightness areas that are separate from this brightness, white-out or black blurring can be prevented in the image that is displayed or printed out.

The second brightness range determination means can further comprise second average value calculation means for calculating the average of the brightness values of pixels which have a lower brightness than the first brightness range and which are in a brightness range that differs from the first brightness range set by the first brightness range setting means, wherein the second brightness range determination means is able to determine the second brightness range on the basis of the average value calculated by the second average value calculation means.

Accordingly, because a large number of grayscales can be allocated to the main brightness area of the image signal and to low brightness areas that are separate from this brightness, white-out or black blurring can be prevented in the image that is displayed or printed out.

The brightness range setting means can further comprise third brightness range determination means for determining a third brightness range in a range that differs from the first brightness range set by the first brightness range setting means and the second brightness range determined by the second brightness range determination means.

Furthermore, the brightness range setting means is able to determine three or more brightness ranges for which the brightness ranges are different.

In addition, the brightness range setting means can comprise extraction means for extracting pixels that are contained in a predetermined image area of the image signal from the pixel values acquired by the acquisition means; first average value calculation means for calculating the average value of the brightness values of pixels contained in the predetermined image area of the image signal extracted by the extraction means; first brightness range setting means for setting a first brightness range on the basis of the average value of the brightness values calculated by the first average value calculation means; and second brightness range determination means for determining a second brightness range in a range that differs from the first brightness range set by the first brightness range setting means.

By adopting a predetermined image area as an image part where the same photographic object is expected to be picked up at regular intervals in the image signal or an image part where a photographic object (roadway or the like, for example) that is expected to occupy the majority of the image is expected to be picked up, for example, screen flicker in cases where a moving image in particular is picked up and displayed can be prevented.

The second brightness range determination means can further comprise second average value calculation means for calculating the average of the brightness values of pixels which have a higher brightness than the first brightness range and which are in a brightness range that differs from the first brightness range set by the first brightness range setting means, wherein the second brightness range determination means is able to determine the second brightness range on the basis of the average value calculated by the second average value calculation means.

Accordingly, because a large number of grayscales can be allocated to the main brightness area of the image signal and to high brightness areas that are separate from this brightness, white-out or black blurring can be prevented in the image that is displayed or printed out.

The second brightness range determination means can further comprise second average value calculation means for calculating the average of the brightness values of pixels which have a lower brightness than the first brightness range and which are in a brightness range that differs from the first brightness range set by the first brightness range setting means, wherein the second brightness range determination means is able to determine the second brightness range on the basis of the average value calculated by the second average value calculation means.

Accordingly, because a large number of grayscales can be allocated to the main brightness area of the image signal and to low brightness areas that are separate from this brightness, white-out or black blurring can be prevented in the image that is displayed or printed out.

The brightness range setting means can further comprise third brightness range determination means for determining a third brightness range in a range that differs from the first brightness range set by the first brightness range setting means and the second brightness range determined by the second brightness range determination means.

In addition, three or more brightness ranges each having a different brightness range can be determined by the brightness range setting means.

The brightness range setting means can comprise histogram detection means for determining a histogram that represents a distribution of brightness values of the pixels contained in the image signal acquired by the acquisition means; and comparison means for comparing the number of pixels distributed in the respective brightness values with a predetermined threshold value, on the basis of the histogram detected by the histogram detection means, wherein the brightness range setting means is able to set the plurality of brightness ranges on the basis of the result of the comparison by the comparison means.

The threshold value may be a value that is found experimentally or experientially and may be a value that can be set by the user, for example.

The image processing apparatus can further comprise operation input means for receiving an operation input of a user, wherein the brightness range setting means is able to set the plurality of brightness ranges on the basis of the operation input of the user that is input by means of the operation input means.

Accordingly, in cases where the brightness areas of pixels corresponding with the image information required by the user are known beforehand in the image picked up, for example, the processing can be simplified and the costs of the apparatus can be reduced.

The image processing apparatus can further comprise operation input means for receiving an operation input of a user, wherein the brightness range setting means comprises: brightness range settable area setting means for setting a plurality of brightness range settable areas on the basis of the operation input of the user that is input by means of the operation input means; histogram detection means for detecting a histogram that represents a distribution of brightness values of the pixels contained in the brightness range settable areas set by the brightness range settable area setting means; and comparison means for comparing the number of pixels distributed in the respective brightness values with a predetermined threshold value, on the basis of the histogram detected by the histogram detection means; and the brightness range setting means is able to set the plurality of brightness ranges on the basis of the result of the comparison by the comparison means.

Accordingly, although brightness areas of pixels corresponding with the image information required by the user are known beforehand in the image picked up, for example, in cases where the brightness areas of the pixels that correspond with the image information required by the user vary with time according to some kind of pattern, i.e. for the same brightness area, there is sometimes a lot of information during the daytime and barely any information in the evening, or a lot of information in the evening and at night but barely any information in the morning or during the daytime, the prioritized allocation of the number of grayscale steps to brightness areas that do not have the information required by the user can be avoided.

The image signal can be picked up by means of a logarithmic conversion-type image pickup device that outputs pixel values substantially proportional to a logarithm for an incident light amount by utilizing a semiconductor sub-threshold characteristic.

An image pickup device that is capable of picking up an image of a photographic object in a dynamic range that is wider than that of the human eye is preferable.

The conversion means is able to set a conversion characteristic such that the number of grayscale steps is not allocated outside the brightness ranges set by the brightness range setting means.

Accordingly, a greater number of grayscale steps can be allocated to the set brightness ranges.

The conversion means sets an intermediate area that is close to the boundary between the brightness ranges set by the brightness range setting means and sets a conversion characteristic such that the greatest number of grayscale steps is allocated to a part excluding the intermediate area of the brightness ranges set by the brightness range setting means; the second largest number of grayscale steps is allocated to the intermediate area; and the smallest number of grayscale steps is allocated to a part which is other than the intermediate area and which is outside the brightness ranges set by the brightness range setting means.

The intermediate area may be a predetermined brightness area at the midpoint of which is the boundary between the brightness ranges set by the brightness range settingmeans or may be a brightness range that corresponds with a predetermined number of pixels with a brightness value close to the pixels corresponding to the boundary of the brightness range.

In addition, the intermediate area may be set to straddle the boundary between the brightness ranges set by the brightness range setting means, may be set exactly according to the boundary between the brightness ranges set by the brightness range setting means, or may be set in the closest area to the set brightness ranges which is outside the brightness ranges set by the brightness range setting means.

The conversion means is able to set a conversion characteristic such that the number of grayscale steps is not allocated to a part which is other than the intermediate area and which is outside the brightness ranges set by the brightness range setting means.

The allocated numbers of brightness grayscale steps can be made to change gradually by setting the intermediate area.

The image processing method of the present invention is an image processing method for an image processing apparatus that processes an image signal that is picked up by an image pickup device that outputs pixel values substantially proportional to a logarithm for an incident light amount, comprising: an acquisition step of acquiring the image signal; a brightness range setting step of setting a plurality of brightness ranges in the brightness range of the image signal acquired by the processing in the acquisition step; and a conversion step of converting the brightness of the pixels contained in the image signal acquired by the processing in the acquisition step such that the allocation of the number of grayscale steps of the brightness differs for the brightness ranges set by the processing in the brightness range setting step and outside the brightness ranges.

The image signal can be picked up by means of a logarithmic conversion-type image pickup device that outputs pixel values substantially proportional to a logarithm for the incident light amount by utilizing a semiconductor sub-threshold characteristic, for example.

An image pickup device can be an HDRC (High Dynamic Range CMOS (Complementary Metal Oxide Semiconductor)), for example.

Such an image pickup device is capable of picking up an image of a photographic object over a dynamic range that is wider than that of the human eye.

The program of the present invention and the program recorded on a recording medium is a program for causing a computer to execute processing of an image signal that is picked up by an image pickup device that outputs pixels values substantially proportional to a logarithm for an incident light amount, and the processing comprises an acquisition control step of controlling the acquisition of the image signal; a brightness range setting step of setting a plurality of brightness ranges in the brightness range of the image signal the acquisition of which is controlled by the processing in the acquisition control step; and a conversion step of converting the brightness of the pixels contained in the image signal which is acquired by the processing in the acquisition control step such that the allocation of the number of grayscale steps of the brightness differs for the brightness ranges set by the processing in the brightness range setting step and outside the brightness ranges.

The image signal is picked up by means of a logarithmic conversion-type image pickup device that outputs pixel values substantially proportional to a logarithm for the incident light amount by utilizing a semiconductor sub-threshold characteristic, for example.

An image pickup device can be an HDRC (High Dynamic Range CMOS (Complementary Metal Oxide Semiconductor)), for example.

The image pickup device is capable of picking up an image of a photographic object in a dynamic range that is wider than that of the human eye is preferable.

In the case of the image processing apparatus, image processing method, and program of the present invention, a plurality of brightness ranges in the brightness range of the image signal picked up by the image pickup device that outputs pixel values substantially proportional to a logarithm for the incident light amount are picked up and the brightness of the pixels contained in the image signal is converted such that grayscales that differ from those outside the brightness ranges are allocated to these brightness ranges.

The set brightness ranges are, for example, a brightness range that includes the average brightness in the picked up image signal, a brightness range that includes the average brightness in ranges of higher brightness or lower brightness than the range including the average brightness, a brightness range that is determined based on an image part in which the same photographic object is expected to be picked up at regular intervals in the image signal or an image part in which a photographic object that is expected to occupy the majority of the image is expected to be picked up, a brightness range that includes the brightness of numbers of pixels of a fixed number or more within the picked up image, and a brightness range that is preset by the user, and so forth, these being brightness areas required by the user to which a large number of grayscales are to be allocated such that, when displayed or printed out, for example, the brightness ranges are displayed or printed out in a state where same are easily identified.

Therefore, an image of a wide dynamic range that is easy for the user to identify can be obtained without performing complex processing.

The present invention makes it possible to perform processing to display or output a picked up image signal and, more particularly, obtain an image of a wide dynamic range that is easy for the user to identify without performing complex processing.

### BRIEF DESCRIPTION OF THE DRAWINGS

Fig. 1 shows the operating principles of a conventional wide dynamic range camera;
Fig. 2 is a block diagram showing an embodiment of the image processing system of the present invention;
Fig. 3 is a block diagram that shows an embodiment of the image pickup apparatus of Fig. 2;
Fig. 4 is a graph showing the sensitivity characteristic of a logarithmic conversion-type image pickup device or the like;
Fig. 5 is a block diagram showing a first constitutional example of an image generation section;
Fig. 6A serves to illustrate conversion of the output level with respect to the input level;
Fig. 6B serves to illustrate conversion of the output level with respect to the input level;
Fig. 6C serves to illustrate conversion of the output level with respect to the input level;
Fig. 7A serves to illustrate conversion of the output level with respect to the input level;
Fig. 7B serves to illustrate conversion of the output level with respect to the input level;
Fig. 7C serves to illustrate conversion of the output level with respect to the input level;
Fig. 8A serves to illustrate an input signal, a grayscale-converted signal, and a displayed signal;
Fig. 8B serves to illustrate an input signal, a grayscale-converted signal, and a displayed signal;
Fig. 8C serves to illustrate an input signal, a grayscale-converted signal, and a displayed signal;
Fig. 9 is a flowchart serving to illustrate image display processing 1;
Fig. 10 serves to illustrate a difference in the display image;
Fig. 11 serves to illustrate a difference in the display image;
Fig. 12 serves to illustrate a difference in the display image;
Fig. 13 serves to illustrate the display image;
Fig. 14 is a block diagram showing a second constitutional example of an image generation section;
Fig. 15A serves to illustrate conversion of the output level with respect to the input level;
Fig. 15B serves to illustrate conversion of the output level with respect to the input level;
Fig. 15C serves to illustrate conversion of the output level with respect to the input level;
Fig. 16A serves to illustrate an input signal, a grayscale-converted signal, and a displayed signal;
Fig. 16B serves to illustrate an input signal, a grayscale-converted signal, and a displayed signal;
Fig. 16C serves to illustrate an input signal, a grayscale-converted signal, and a displayed signal;
Fig. 17 is a flowchart serving to illustrate image display processing 2;
Fig. 18 serves to illustrate a display image;
Fig. 19 serves to illustrate a display image;
Fig. 20 is a block diagram showing a third constitutional example of an image generation section;
Fig. 21 is a block diagram showing a fourth constitutional example of an image generation section;
Fig. 22 serves to illustrate a cutout area;
Fig. 23 is a flowchart that serves to illustrate image display processing 3;
Fig. 24 is a block diagram showing a fifth constitutional example of the image generation section;
Fig. 25 is a flowchart that serves to illustrate image display processing 4;
Fig. 26 is a block diagram showing a sixth constitutional example of the image generation section;
Fig. 27 is a block diagram showing a seventh constitutional example of the image generation section;
Fig. 28 serves to illustrate histogram analysis and the setting of the brightness range;
Fig. 29 is a flowchart that serves to illustrate image display processing 5;
Fig. 30 is a block diagram showing an eighth constitutional example of the image generation section;
Fig. 31 is a flowchart that serves to illustrate image display processing 6;
Fig. 32 is a block diagram showing a ninth constitutional example of the image generation section;
Fig. 33 serves to illustrate histogram analysis and the setting of the brightness range;
Fig. 34 is a flowchart that serves to illustrate image display processing 7; and
Fig. 35 is a block diagram showing a constitutional example of a personal computer.

### DESCRIPTION OF THE PREFERRED EMBODIMENTS

Embodiments of the present invention will be described hereinbelow with reference to the drawings.

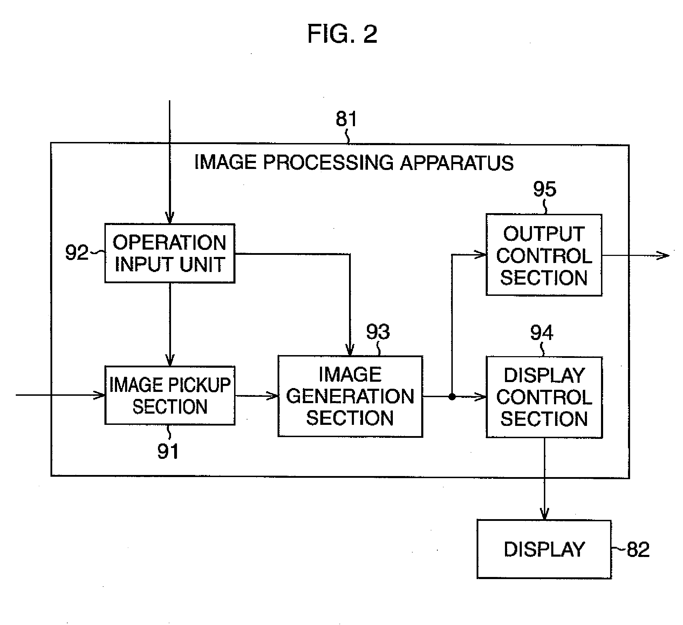

Fig. 2 is a block diagram showing an embodiment of an image processing apparatus 81.

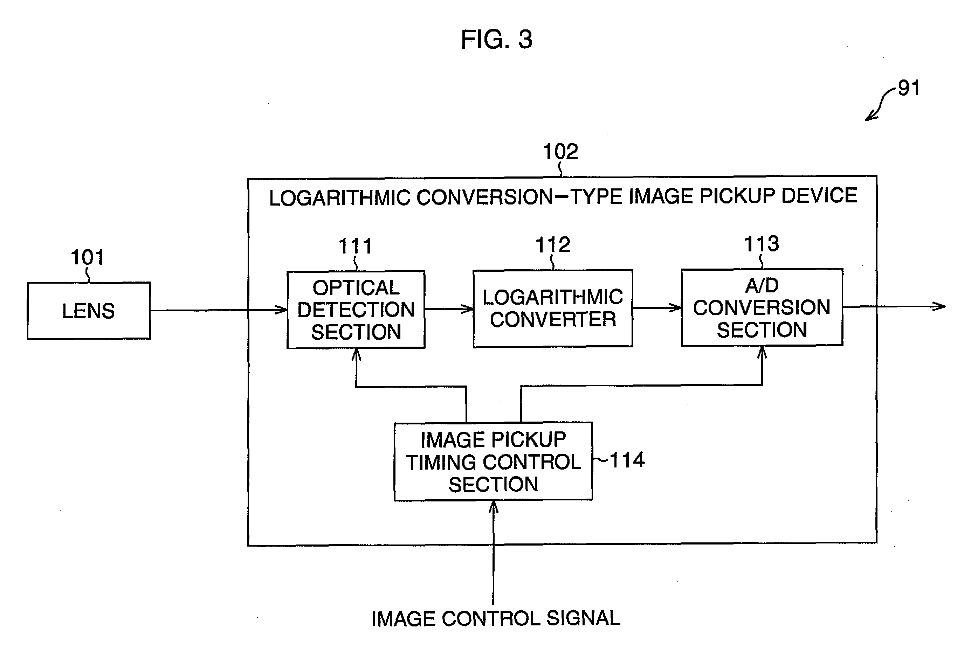

An image pickup section 91 picks up an image of a photographic object based on an operation input by the user that is supplied by an operation input section 92 and supplies the image signal thus obtained to an image generation section 93. Details of the image pickup section 91 will be provided subsequently by using Fig. 3.

The operation input section 92 is constituted by input devices such as a release button or other buttons, operation keys, and a touch panel, for example, and receives user operation inputs and supplies instructions from the user to the image pickup section 91. The user operation input is not limited to an image pickup timing instruction (upon depressing the release button or the like), for example, and can sometimes be an instruction to start or end dynamic image pickup (in other words, consecutive frame image pickup) and can sometimes be an instruction to set a time for starting or ending the image pickup. In addition, the operation input section 92 supplies the set value to the image generation section 93 in cases where an input of a predetermined set value that is used in the processing of the image generation section 93 is received from the user.

The image generation section 93 executes processing to display an image signal that is supplied by the image pickup section 91 and convert the image signal into an image signal that is suitable for a printout and supplies the converted image signal to a display control section 94 or output control section 95. In addition, the image generation section 93 receives an input of a set value that is required for the processing if required from the operation input section 92 and, on that basis, executes processing to display the image signal supplied by the image pickup section 91 and convert the image signal into an image signal that is suitable for a printout.

The display control section 94 performs processing to convert the processed image signal that has been supplied by the image generation section 93 into the resolution or gradation of a display 82 and supplies the processed signal to the display 82.

The output control section 95 performs processing to convert the processed image signal supplied by the image generation section 93 into a resolution and gradation that can be processed by an output destination device such as a printer, for example and outputs the processed signal to an external device such as a printer (not shown).

The display 82 receives the input of the display image signal that is supplied by the display control section 94 and then displays an image (stationary image or a moving image of a plurality of frames), for example.

Fig. 3 is a block diagram that shows a more detailed constitutional view of the image pickup section 91 of the image processing apparatus 81 of Fig. 2. The image pickup section 91 is constituted comprising a lens 101 and a logarithmic conversion-type image pickup device 102. The logarithmic conversion-type image pickup device 102 is a logarithmic conversion-type image pickup device such as an HDRC (High Dynamic Range CMOS (Complementary Metal Oxide Semiconductor)), for example, and is constituted by a optical detection section 111, a logarithmic conversion section 112, an A/D conversion section 113, and an image pickup timing control section 114.

Light that is emitted by the photographic object that is picked up by the image pickup section 91 (or light that is reflected by the photographic object) enters lens 101 and condenses on the optical detection surface (not shown) of the optical detection section 111 of the logarithmic conversion-type image pickup device 102.

The optical detection section 111 is converted into a light-receiving element that comprises a plurality of photodiodes, for example. The optical detection section 111 converts the light of the photographic object that has been condensed by the lens 101 into charge that corresponds with the brightness (intensity) of the incident light and accumulates the converted charge. The optical detection section 111 supplies the accumulated charge to the logarithmic conversion section 112 in sync with a control signal that is supplied by the image pickup timing control section 114.

The logarithmic conversion section 112 is constituted by a plurality of MOSFET (Metal Oxide Semiconductor Field Effect Transistors), for example. The logarithmic conversion section 112 utilizes the sub-threshold characteristic of the MOSFET to generate an analog electrical signal in which the charge supplied from the optical detection section 111 is converted into a voltage value that is substantially proportional to the logarithm (light amount logarithm for the light of the photographic object) of the charge count (current strength) for each pixel. The logarithmic conversion section 112 supplies the analog electrical signal thus generated to the A/D conversion section 113.

TheA/D conversion section 113 A/D converts the analog electrical signal into digital image data in sync with a control signal that is supplied by the image pickup timing control section 114. For example, in cases where the analog electrical signal is converted into binary digital image data without a 24-bit code, the image data pixel values take a range where the darkest value is 0 and the brightest value is 224-1. The A/D conversion section 113 supplies the converted digital image data to the image processing apparatus 92.

Thus, the image pickup section 91 outputs digital image data comprising pixel values that are proportional to the logarithm for the brightness of the light of the photographic object entering the optical detection section 111 (incident light amount). The details on the logarithm conversion-type image pickup device will be disclosed in Published Japanese Patent No. H7-506932, for example.

Further, the optical detection section 111 of the logarithmic conversion-type image pickup device 102 is also able to supply the converted charge to the logarithmic conversion section 112 as is without accumulating the converted charge.

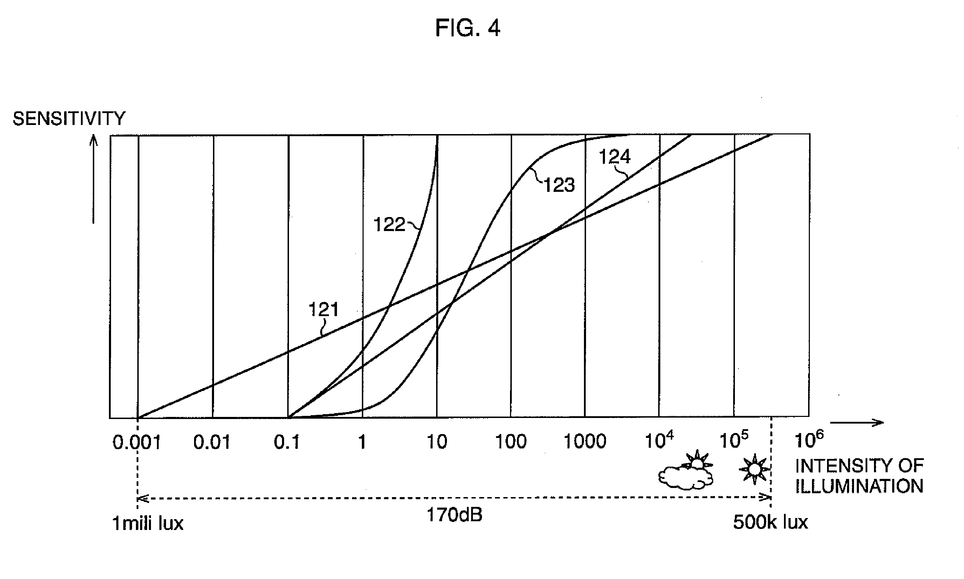

Fig. 4 is a graph showing sensitivity characteristics for the logarithmic conversion-type image pickup device 102, a CCD (Charge Coupled Device) image pickup device, a silver salt film, and the human eye. The horizontal axis of Fig. 4 represents the logarithmic value of the intensity of the incident light (the units are lux), while the vertical axis represents the sensitivity with respect to the intensity of the incident light. Line 121 represents the sensitivity characteristic for the logarithmic conversion-type image pickup device 102; line 122 represents the sensitivity characteristic for the CCD image pickup device; line 123 represents the sensitivity characteristic of the silver salt film, and line 124 represents the sensitivity characteristic of the human eye.

As stated earlier, the logarithmic conversion-type image pickup device 102 outputs image data comprising brightness values (or pixel values) substantially proportional to the logarithm for the incident light amount and, even in cases where the incident light amount is large, the capacity of devices such as a photodiode or MOSFET that constitute the logarithmic conversion-type image pickup device 102 is saturated and a range in which the current flowing through the respective devices and the voltage applied thereto produces outputs that correspond with the inputs of the respective devices is not exceeded. Hence, in a brightness range within which image pickup is possible, brightness values (or pixel values) that correspond to fluctuations in the incident light amount can be obtained substantially accurately. In other words, an image comprising brightness values (or pixel values) that substantially accurately mirror the strength of the incident light amount from the photographic object can be picked up within a dynamic range of approximately 170 dB from about one millilux to about 500 kilolux which is brighter than sunlight, for example, which is wider than the dynamic ranges of a CCD image pickup device, silver salt film, and the human eye. The dynamic range of the logarithmic conversion-type image pickup device 102 used in the image pickup section 91 is not limited to the aforementioned 170 dB. A dynamic range that corresponds with the required dynamic range such as approximately 100 dB or 200 dB or the like may be used in accordance with the intended usage.

The logarithmic conversion-type image pickup device 102 is able to pick up an image of a photographic object within a dynamic range of approximately 170 dB from about one millilux to about 500 kilolux which is brighter than sunlight, for example, which is wider than the dynamic ranges of a CCD image pickup device, silver salt film, and the human eye, without saturating the capacity of the photodiode and MOSFET and so forth that constitute the logarithmic conversion-type image pickup device 102 by outputting image data comprising pixel values which are values substantially proportional to the logarithm for the incident light amount as mentioned earlier.

Therefore, with the image pickup section 91 that employs the logarithmic conversion-type image pickup device 102, brightness clipping does not occur in a brightness range that is perceptible to humans and, therefore, there is no need to adjust the incident light amount by adjusting the aperture and shutter speed and so forth. In other words, the image pickup section 91 is able to faithfully pick up fine changes in the brightness of the photographic object even without adjusting the incident light amount.

For example, in cases where the image pickup section 91 picks up an image of the front of a vehicle from within the vehicle during the day, even when the sun enters the field angle, an image that faithfully reproduces the sun and the state of the road in front can be picked up without adjusting the incident light amount. Furthermore, in cases where the image pickup section 91 picks up an image of the front of the vehicle from within the vehicle at night, even when the headlights of a vehicle driving in the opposite direction are shining from the front, an image that faithfully reproduces the light of the headlights of the opposing vehicle as well as parts that are not illuminated by the headlights of one's own vehicle can be picked up without adjusting the incident light amount.

In addition, whereas, for the CCD image pickup device and silver salt film, the sensitivity characteristics are not proportional to the logarithm for the intensity of the incident light due to factors such as the gamma characteristic as indicated by lines 122 and 123, in the case of the logarithmic conversion-type image pickup device 102, the sensitivity characteristic is substantially proportional to the logarithm for the intensity of the incident light.

Thus, the image pickup section 91 that employs the logarithmic conversion-type image pickup device 102 is not affected by the occurrence of brightness clipping, adjustments to the incident light amount, or gamma characteristics. Hence, the pixel values of the image data picked up by the image pickup section 91 fluctuate so that the fluctuations in the brightness of the photographic object and the movement of the photographic object are substantially faithfully mirrored.

In addition, the pixel values of the image data output by the image pickup section 91 are values substantially proportional to the logarithm of the incident light amount. Therefore, the distribution of the pixel values in the image data obtained by picking up the photographic object is mirrored in substantially the same way as the distribution of the reflectance of the photographic obj ect irrespective of the brightness (intensity) of the light irradiated onto the photographic object. For example, in cases where a photographic object for which the ratio between the maximum and minimum values for the reflectance is 10:1 is picked up by irradiating light that differs in intensity by approximately 100 times from the first occasion to the second occasion, the width of the histogram that represents the distribution of the pixel values of the image data on the first occasion and of the image data on the second occasion is substantially the same value (1=log₁₀10). However, in cases where the pixel values of the image data are proportional to the incident light amount, the difference in the width of the histogram representing the distribution of the pixel values of the image data on the first occasion and the image data on the second occasion is substantially one hundred times.

In addition, irrespective of the distribution of the brightness (reflectance) of the photographic object, in cases where the brightness of the photographic object fluctuates with substantially the same ratio, the fluctuation value for the pixel values of the image data obtained by picking up the photographic object are substantially the same. For example, in cases where there are two areas for which the brightness ratio is 100:1 in the photographic object, the intensity of the light irradiated onto the photographic object changes substantially uniformly and, when the brightness of the photographic object fluctuates with substantially the same ratio of +5%, the fluctuation values of the pixel values corresponding to the two areas are substantially the same value (log₁₀1.05). On the other hand, in cases where the pixel values of the image data are proportional to the incident light amount, the difference in the fluctuation value of the pixel values corresponding to the two areas is approximately 100 times.

Further, as will be described by using Fig. 4, the logarithmic conversion-type image pickup device 102 has an extremely wide brightness range in comparison with those of the sensitivity of the human eye (the characteristic indicated by line 124 of Fig. 4), the sensitivity of the CCD image pickup device (the characteristic indicated by line 122 of Fig. 4), and the sensitivity of a silver salt film (the characteristic indicated by line 123 in Fig. 4). Hence, in cases where all the grayscales of the image data that are picked up by the image pickup section 91 that employs the logarithmic conversion-type image pickup device 102 are displayed after being converted to grayscales that correspond with the display 82, an image that is visible to the human eye, that is, an image for which there is no difference in shade, that is, an image without sharpness results in comparison with an image that is picked up using a conventional CCD image pickup device or silver salt film.

In other words, by using the image pickup section 91 that employs the logarithmic conversion-type image pickup device 102, the extremely dark parts as well as the extremely bright parts are faithfully picked up. However, in cases where the image data thus picked up are displayed following grayscale conversion thereof which is based on the gradation that can be displayed by display 82, the extremely dark parts and extremely bright parts that are picked up cannot be discriminated by the user who references the displayed image and the mid-section of all the grayscales that can be discriminated by the user is displayed in a state where there is now a small difference in shade. Likewise, because the grayscales are then not limited to the gradation of a printer or the like, the image data picked up are converted into a gradation that can be processed by the output destination device and the image that has been printed out is similarly an image that is visible to the human eye and in which there is no difference in shade, that is, an image with no sharpness in comparison with an image that has been picked up using a conventional CCD image pickup device or a silver salt film.

Further, the whole range of brightness of the image picked up by the image pickup section 91 that employs the logarithmic conversion-type image pickup device 102 is not converted into grayscales that can be displayed by display 82, for example. Instead, the maximum and minimum values of the brightness values of the pixels contained in the image obtained are extracted from the brightness range obtained and, in cases where the brightness range between these maximum and minimum values is to be converted to grayscales that can be displayed by the display 82, the quality of the image displayed when the brightness range contained in one image is relatively narrow clearly improves. However, in cases where bright and dark parts are mixed in one picked up image, the extremely dark parts and extremely bright parts picked up cannot be discriminated by the user referencing the displayed image and a display image for which there is no difference in shading in the mid-section of all the grayscales that can be discriminated by the user is produced.

Therefore, the image generation section 93 executes image processing that permits the generation of image data that can be displayed or printed out in a state that can be discriminated by the user even in cases where the image generation section 93 receives a supply of image data that have been picked up by the image pickup section 91 that employs the logarithmic conversion-type image pickup device 102 and displays the image data using grayscales that correspond with the display 82 or in cases where the image data are output using grayscales that correspond with the output destination external device.

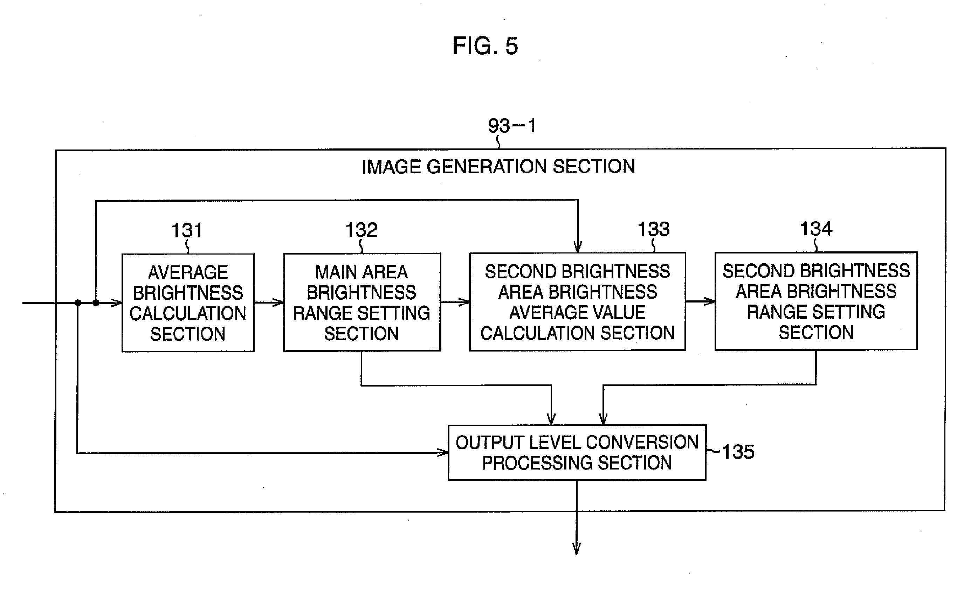

Fig. 5 is a block diagram that shows the constitution of an image generation section 93-1 which is a first example of the constitution of the image generation section 93 in Fig. 2

An average brightness calculation section 131 acquires the image signal that was supplied by the image pickup section 91, calculates the average brightness, and supplies the result of calculating the average brightness to a main area brightness range setting section 132.

The main area brightness range setting section 132 sets the brightness range of the main area based on the average brightness of the image signal supplied by the average brightness calculation section 131 and supplies the main area brightness range thus set to an output level conversion processing section 135 and to a second brightness area brightness average value calculation section 133.

The main area brightness range setting section 132 may, for example, adopt a range of predetermined brightness the midpoint of which is the average brightness of the image signal as the brightness range of the main area or may establish the brightness range of the main area by taking the pixel with the average brightness of the image signal as the midpoint and selecting pixels of a predetermined bit count in order starting with the pixel with the closest brightness value to the brightness of the pixel with the average brightness.

The second brightness area brightness average value calculation section 133 calculates the average brightness of the pixels in a range of higher brightness than the brightness range of the main area that was set by the main area brightness range setting section 132 in the image signal supplied by the image pickup section 91 and supplies the calculation result to a second brightness area brightness range setting section 134.

The second brightness area brightness range setting section 134 sets the brightness range of a second brightness area based on the average value of the pixels in a range of higher brightness than the brightness range of the main area that is supplied by the second brightness area brightness average value calculation section 133 and supplies the brightness range of the second brightness area thus set to the output level conversion processing section 135.

The second brightness area brightness range setting section 134 may, for example, set a range of predetermined brightness the midpoint of which is the average brightness of pixels in a range of higher brightness than the brightness range of the main area, as the brightness range of the secondbrightness area or may establish the brightness range of the second brightness area by taking the pixel with the average brightness of the pixels of the range of higher brightness than the brightness range of the main area as the midpoint and selecting pixels of a predetermined bit count in order starting with the pixel with the closest brightness value to the brightness of the pixel with the average brightness.

The output level conversion processing section 135 acquires the image signal supplied by the image pickup section 91 and converts the output level of the image signal thus acquired on the basis of information on the brightness range of the main area and the brightness range of the second brightness area that is supplied by the main area brightness range setting section 132 and second brightness area brightness average value calculation section 133.

More specifically, the output level conversion processing section 135 allocates an output level signal of a predetermined number of steps to the level of the brightness signal thus input (signals of respective brightness grayscale levels in cases where the brightness is divided by a predetermined number of grayscale steps) so that the signals of the allocated output levels are output. Here, the output level conversion processing section 187 differentiates the allocation of brightness grayscale levels for the output level signal between the brightness ranges set for the main area and second brightness area and other ranges. In other words, the output level conversion processing section 187 executes conversion processing to establish a large gradation for the pixels of the corresponding brightness range by allocating a greater number of output level steps than for the brightness ranges set for the main area and second brightness area. Thus, the parts of the brightness ranges corresponding with the main area and second brightness area in the image that is displayed or printed out can be better identified by the user.

The output level conversion processing section 135 is capable of, for example, dividing up and allocating the whole number of grayscale steps to the input signal contained in the brightness range of the main area and the brightness range of the second brightness area but not allocating the number of output level steps to other ranges, that is, to a range of lower brightness than the main area, a brightness range between those of the main area and second brightness area, or to a range of higher brightness than the second brightness area.

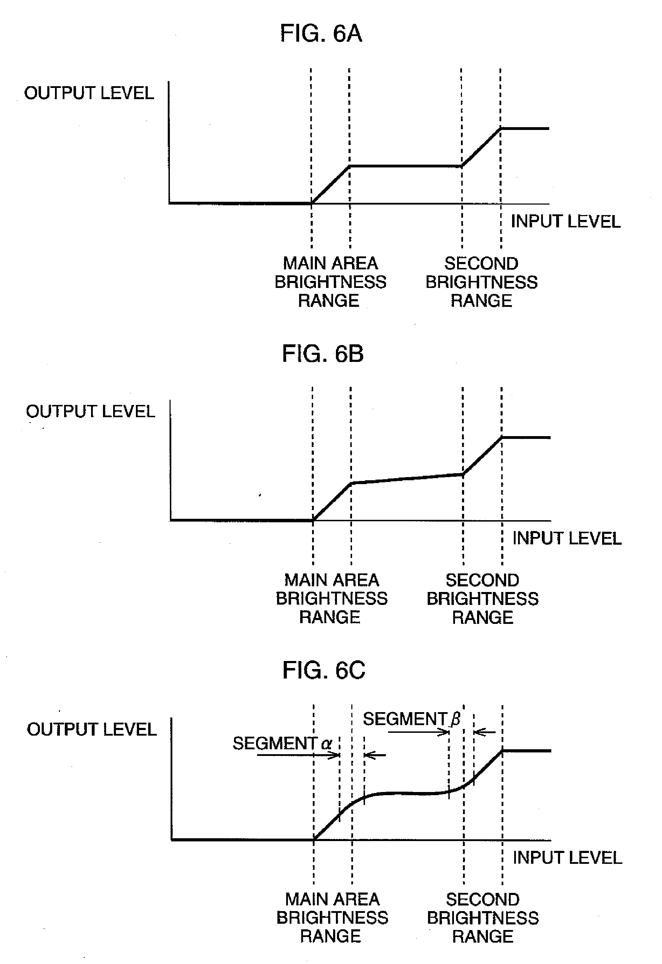

Thus, in cases where the number of steps of the output level grayscales has been allocated to the input level, the output level of pixels of a lower brightness input level than the brightness range of the main area is zero (that is, pitch black) as shown in Fig. 6A. Further, the predetermined grayscale output levels are allocated in accordance with the input level to the pixels in the main area brightness range. In addition, the pixels in a brightness range between those of the main area and second brightness area are output using the maximum value of the output levels that are allocated to the brightness range of the main area irrespective of the input level. The output levels of the grayscales from the maximum value of the output levels allocated to the brightness range of the main area to the maximum value of all the output levels are allocated, in accordance with the input level using a number of steps which is either the same as or substantially the same as the numberof steps of the main area, to the pixels in the second brightness area. Further, pixels of a higher brightness than the second brightness area are allocated the maximum value of the output levels allocated to the second brightness area, that is, the maximum value of all the output levels irrespective of the input level, irrespective of the input level.

In addition, the output level conversion processing section 135 is able, for example, to allocate a predetermined number of steps among the output levels to the main area and second brightness area, allocate a smaller number of steps than the number of steps allocated to the main area and second brightness area to the brightness range between the main area and second brightness area (that is, a narrower tonal range than that of the main area and second brightness area), and not allocate the number of output level steps to a range of lower brightness than the main area and a range of higher brightness than the second brightness area.

Thus, in cases where the number of steps of the output level grayscales has been allocated to the input level, the output values of the pixels of a lower brightness than the brightness range of the main area is zero, as shown in Fig. 6B, for example. Further, predetermined grayscale output levels are allocated, in accordance with the input level, to the pixels in the brightness range of the main area. In addition, for those pixels in the brightness range between those of the main area and second brightness area, the output levels corresponding with the input level are allocated in a smaller number of steps than the number of steps allocated to the brightness range of the main area. Output levels from the maximum value of the output levels allocated to the brightness range between those of the main area and second brightness area to the grayscale constituting the maximum value of all the output levels are allocated, in accordance with the input level in the same or substantially the same number of steps as for the main area, to the pixels in the second brightness area. Further, the maximum value of the output levels allocated to the second brightness area, that is, the maximum output level, is allocated, irrespective of the input level, to pixels of higher brightness than the second brightness area.

In addition, the output level conversion processing section 135 is able, for example, by adopting a predetermined brightness range the midpoint of which is the upper limit value of the brightness of the main area as segment α and a predetermined brightness range the midpoint of which is the lower limit value of the brightness of the second brightness area as segment β, to allocate a predetermined number of steps among the output levels to pixels outside segments α and β in the main area or second brightness area, allocate a smaller number of steps than the number of steps allocated to the parts outside segment α or β in the main area or second brightness area to segment α or β, and not allocate the number of output level steps to pixels of a lower brightness than the main area and a higher brightness than the second brightness area. Here, a smaller number of steps than the number of steps for the output levels allocated to segment α or β may be allocated to pixels not falling within segment α or β in the brightness range between those of the main area and second brightness area or a number of steps may not be allocated.

Thus, in cases where the number of output level grayscale steps has been allocated to the input level, the output values of pixels of lower brightness than the brightness range of the main area is zero, as shown in Fig. 6C, for example. Further, predetermined grayscale output levels are allocated, in accordance with the input level, to the pixels outside segment α which are in the brightness range of the main area. In addition, predetermined grayscale output levels larger than the maximum value of the output levels allocated to parts outside segment α of the main area are allocated, using a smaller number of steps than the number of steps allocated to parts outside segment α of the main area, to the pixels of segment α. Further, for the pixels that do not fall within segment α or segment β in the brightness range between those of the main area and second brightness area, output levels which correspond with the input level are allocated in a smaller number of steps than the number of steps allocated to segment α or the maximum value of the output levels allocated to segment α is allocated irrespective of the input level.

In addition, predetermined grayscale output levels that are larger than the maximum value of the output levels in a lower brightness range than segment β are allocated using the same or substantially the same number of steps as for segment α and in a smaller number of steps than the number of steps allocated to parts outside segment α of the main area, to pixels of segment β. Further, grayscale output levels from the maximum value of the grayscales allocated to segment β to the maximum output level of all the output levels are allocated to pixels outside segment β in the brightness range of the second brightness area. In other words, output levels of the same or substantially the same number of steps as for parts outside segment α in the main area, that is, of a greater number of steps than for segment α or β are allocated to pixels outside segment β in the brightness range of the second brightness area. Further, the maximum value of the output levels allocated to the second brightness area, that is, the maximum output level is allocated, irrespective of the input level, to pixels of a higher brightness than the second brightness area.

In Fig. 6C, a predetermined brightness range the midpoint of which is the upper limit value of the brightness of the main area has been adopted as segment α and a predetermined brightness range the midpoint of which is the lower limit value of the brightness of the second brightness area has been adopted as segment β. However, for example, a predetermined segment at the upper limit end of the brightness range of the main area may also be adopted as segment α while a predetermined segment at the lower limit end of the brightness range of the second brightness area may be adopted as segment β. A predetermined segment of a higher brightness than the upper limit of the brightness range of the main area may be adopted as segment α and a predetermined segment of a lower brightness than the lower limit of the brightness range of the second brightness area may be adopted as segment β. In addition, an area where the same number of output level steps as for segments α and β is allocated to the lower limit of the brightness of the main area and to the upper limit of the brightness of the second brightness area may also be established.

In addition, although, in Fig. 6, it is assumed that the pixels of a brightness that is equal to or less than the brightness range of the main area all have a zero output (are pitch black) and the pixels in a range with a brightness that is equal to or more than the brightness range of the second brightness area all have the same output level as the highest brightness of the brightness range of the second brightness area (the maximum output level), it is also possible to allocate a number of steps for output levels of a certain magnitude in the respective brightness ranges which are equal to or less than the brightness range of the main area and equal to or more than the brightness range of the second brightness area.

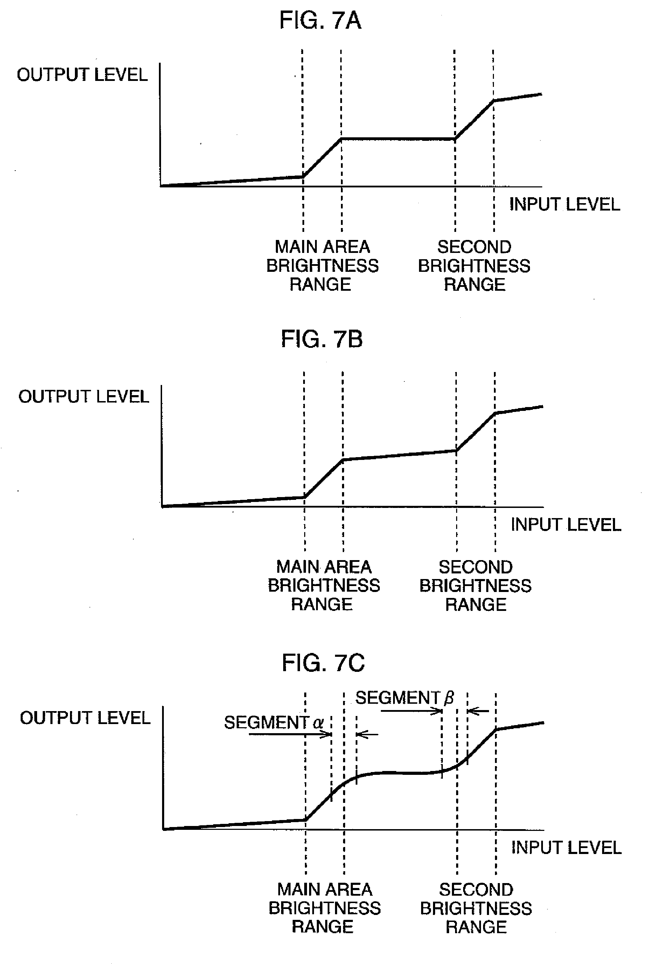

In other words, the output level conversion processing section 135 is able to convert the output level with respect to the input level as shown in Fig. 7A, for example. That is, for pixels for which the brightness input level is lower than the brightness range of the main area, an output level of zero (that is, pitch black) to output levels of a predetermined number of steps that is smaller than the number of steps allocated to the main area are allocated in accordance with the input level. Further, predetermined grayscale output levels are allocated in accordance with the input level to pixels in the main area brightness range. In addition, the pixels of the brightness range between the main area and second brightness area are output with the maximum value of the output levels allocated to the main area irrespective of the input level. Predetermined grayscale output levels from the maximum value of the output values allocated to the main area are allocated in the same or substantially the same number of steps as for the main area, in accordance with the input level, to pixels in the second brightness area. Further, output levels that correspond with the input level are allocated to pixels of a higher brightness than the second brightness area so that there is a smaller number of steps than the number of steps allocated to the main area and second brightness area, from the maximum value of the output levels allocated to the brightness range of the second brightness area to the maximum output level.

Furthermore, the output level conversion processing section 135 is able to convert the output levels with respect to the input level as shown in Fig. 7B, for example. In other words, for pixels for which the brightness input level is lower than the brightness range of the main area, output levels from an output level of zero (that is, pitch black) to output levels of a predetermined number of steps that is smaller than the number of steps allocated to the main area are allocated in accordance with the input level. Moreover, predetermined grayscale output levels are allocated to pixels in the brightness range of the main area in accordance with the input level. In addition, for example pixels in the brightness range between those of the main area and second brightness area, output levels that correspond with the input level are allocated in a smaller number of steps than the number of steps allocated to the main area. Further, predetermined grayscale output levels from the maximum value of the output levels allocated to the brightness range between the main area and second brightness area are allocated, in accordance with the input level, to pixels of the second brightness area, using the same or substantially the same number of steps as for the main area. Further, output levels that correspond with the input level are allocated to pixels of a higher brightness than the second brightness area such that there is a smaller number of steps than the number of steps allocated to the main area from the maximum value of the output levels allocated to the brightness range of the second brightness area to the maximum output level.

In addition, the output level conversion processing section 135 is able to convert the output levels with respect to the input level as shown in Fig. 7C, for example. That is, for pixels with a lower brightness input level than the brightness range of the main area, output levels from zero (that is, pitch black) to output levels of a predetermined number of steps that is smaller than the number of steps allocated to the main area are allocated. Further, predetermined grayscale output levels are allocated in accordance with the input level to pixels outside segment α which are in the main area brightness range. Further, predetermined grayscale output levels greater than the maximum value of the output levels allocated to parts outside segment α of the main area are allocated to pixels of segment α using a smaller number of steps than the number of steps allocated to parts outside segment α of the main area. In addition, for pixels that do not fall within segment α or segment β in the brightness range between the main area and second brightness area, output levels that correspond with the input level are allocated using a smaller number of steps than the number of steps allocated to segment α or the maximum value of the output levels allocated to segment α are allocated irrespective of the input level.

In addition, predetermined grayscale output levels greater than the maximum value of the output levels in a lower brightness range than segment β are allocated, by using a smaller number of steps than the number of steps allocated to parts outside the segment α of the main area, to the pixels of segment β. Further, predetermined grayscale output levels from the maximum value of the grayscales allocated to segment β are allocated, by using the same or substantially the same number of steps as for the brightness ranges outside segment α of the main area in accordance with the input level, to the pixels outside segment β in the brightness range of the second brightness area. In addition, output levels that correspond with the input level are allocated to pixels of a higher brightness than the second brightness area so that there is a smaller number of steps than the number of steps allocated to parts outside segment α of the main area, from the maximum value of the output levels allocated to the brightness range of the second brightness area to the maximum output level.

Further, so too in Fig. 7C, a predetermined brightness range the midpoint of which is the upper limit value of the brightness of the main area has been adopted as segment α and a predetermined brightness range the midpoint of which is the lower limit value of the brightness of the second brightness area has been adopted as segment β. However, for example, a predetermined segment at the upper limit end of the brightness range of the main area may also be adopted as segment α while a predetermined segment at the lower limit end of the brightness range of the second brightness area may be adopted as segment β. A predetermined segment of a higher brightness than the upper limit of the brightness range of the main area may be adopted as segment α and a predetermined segment of a lower brightness than the lower limit of the brightness range of the second brightness areamaybe adopted as segment β. Inaddition, an area where the same number of output level steps as for segments α and β is allocated to the lower limit of the brightness of the main area and to the upper limit of the brightness of the second brightness area may also be established.

In addition, the output level conversion processing section 135 may also determine the number of steps of the grayscales allocated to the respective brightness areas so that the ratio (the tilt of the straight line) of the output levels with respect to the input level in brightness ranges outside the brightness areas of the main area and second brightness area is lower than the ratio of the output levels with respect to the input level in the main area and second brightness area, for example.

As described hereinabove, the main area and second brightness area that are established by the image generation section 93-1 are not preset brightness ranges, being established instead on the basis of a picked up image. In other words, the image generated by the image generation section 93-1 is generated such that a great number of the limited grayscale number are allocated to the brightness range which is the most important in order for the user to identify an image of a photographic object that occupies a multiplicity of screens, for example, of the entire picked up image, and to brightness ranges with a particularly high occupancy ratio among ranges of a higher brightness than the latter brightness range.

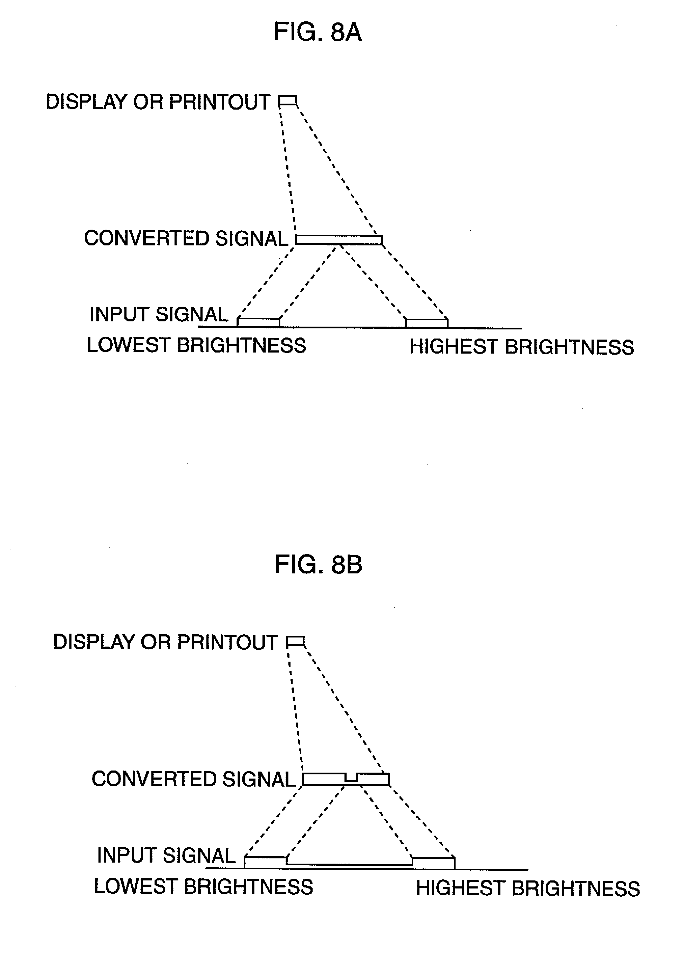

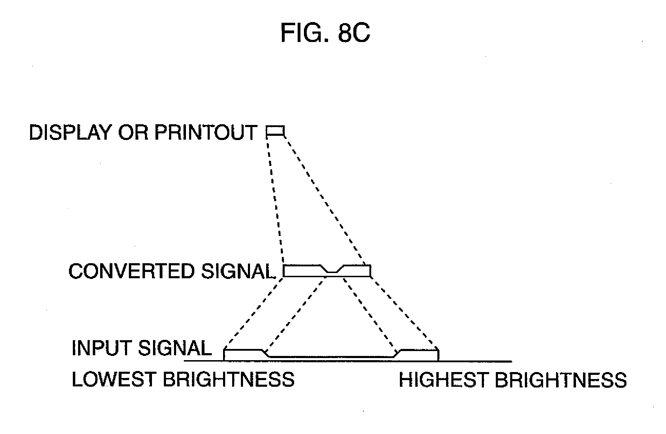

The brightness levels of the input signal, a signal that has undergone grayscale conversion by the output level conversion processing section 135, and the displayed signal will now be described by using Fig. 8.

Fig. 8A shows the brightness levels of an input signal in a case where the grayscale conversion described using Fig. 6A is carried out, of a signal that has undergone grayscale conversion by the output level conversion processing section 135, and of a signal that is output for a display or printout or the like. In the case shown in Fig. 8A, the signals of the main area and second brightness area which are separate brightness ranges are converted into consecutive brightness grayscales in a state where the brightness grayscale widths of the respective signals (the number of steps between the maximum and minimum values of the grayscales within the areas) are sufficient. The pixels of the brightness range between the main area and the second brightness area are all output at the maximum output level of the main area. The converted signals are then grayscale-converted (the gradation is compressed) in accordance with the display or printout conditions. More specifically, for example, in cases where the display 82 is able to display an image using 256 grayscales, the display control section 94 converts a signal that is supplied by the image generation section 93-1, that is, a signal that has been grayscale-converted by the output level conversion processing section 135 into a 256-grayscale signal.

Fig. 8B shows the brightness levels of an input signal in a case where the grayscale conversion described using Fig. 6B is carried out, of a signal that has undergone grayscale conversion by the output level conversion processing section 135, and of a signal that is output for a display or printout or the like. In the case shown in Fig. 8B, only grayscales in a smaller number of steps than those for the main area and second brightness area are provided for the area between the main area and the second brightness area. Hence, even though the number of brightness grayscales for the converted signal is markedly more compressed than for the input signal in proportion to the small number of steps of the area between the main area and second brightness area, the signals of the main area and second brightness area are provided with an adequate brightness grayscale width. Further, the converted signal is grayscale-converted (the gradation is compressed) in accordance with the conditions for a display or printout.

Fig. 8C shows the brightness levels of an input signal in a case where the grayscale conversion describedusing Fig. 6C is carried out, of a signal that has undergone grayscale conversion by the output level conversion processing section 135, and of a signal that is output for a display or printout or the like. In the case shown in Fig. 8C, the number of allocated brightness grayscale steps is made to change gradually in the area between the main area and second brightness area according to the segments α and β, that is, in the segments α and β, grayscales of a smaller number than for the main area and second brightness area are provided. Hence, in the case of the converted signal, the number of brightness grayscales is much more compressed than for the input signal in a state where an adequate brightness grayscale width is provided for the main area and second brightness area. Further, the converted signal is grayscale-converted (the gradation is compressed) in accordance with the conditions for a display or printout.

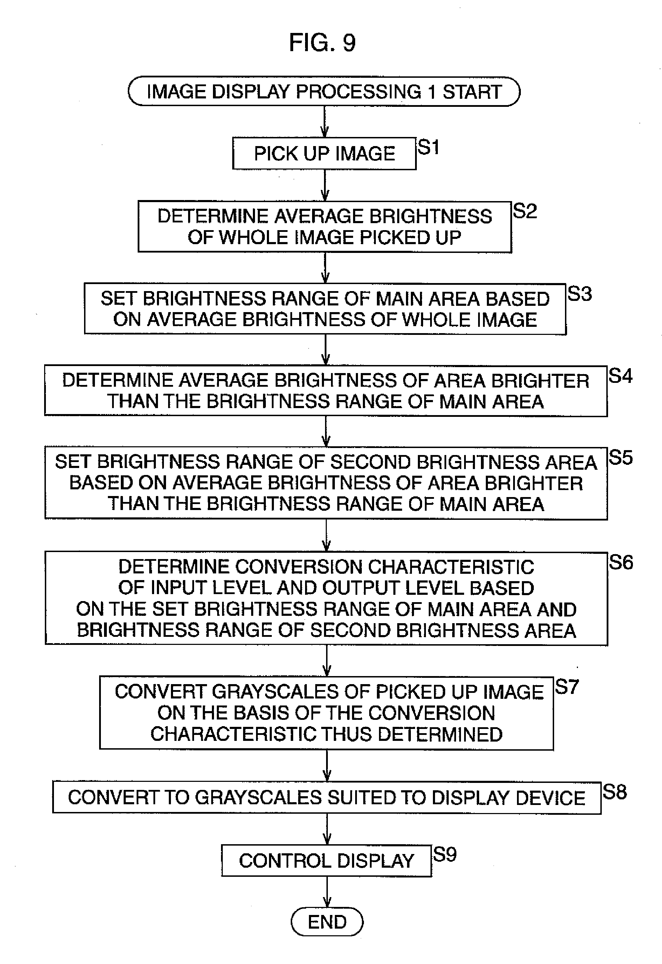

The image display processing 1 that is executed by the image processing apparatus 81 used by the image generation section 93-1 described using Fig. 5 will be described next with reference to the flowchart in Fig. 9.

In step S1, the image pickup section 91 picks up an image of a photographic object and performs logarithmic conversion thereof on the basis of an operation input by the user that is supplied by the operation input section 92 and supplies the A/D converted image pickup image signal to the image generation section 93-1. The image generation section 93-1 acquires the picked up image signal.

In step S2, the average brightness calculation section 131 of the image generation section 93-1 finds the average brightness of the whole picked up image and supplies the calculation result to the main area brightness range setting section 132.

In step S3, the main area brightness range setting section 132 sets the brightness range of the main area on the basis of the average brightness of the whole image supplied by the average brightness calculation section 131 and supplies the brightness range of the main area thus set to the output level conversion processing section 135 and the second brightness area brightness average value calculation section 133.

The main area brightness range setting section 132 may, for example, adopt a range of predetermined brightness the midpoint of which is the average brightness of the image signal as the brightness range of the main area or may establish the brightness range of the main area by taking the pixel with the average brightness of the image signal as the midpoint and selecting pixels of a predetermined bit count in order starting with the pixel with the closest brightness value to the brightness of the pixel with the average brightness.

In step S4, the second brightness area brightness average value calculation section 133 determines the average brightness of an area that is brighter than the brightness range of the main area that was set by the main area brightness range setting section 132 in the image signal supplied by the image pickup section 91 and supplies the calculation result to a second brightness area brightness range setting section 134.

In step S5, the second brightness area brightness range setting section 134 sets the brightness range of a second brightness area based on the average value of the area brighter than the brightness range of the main area that is supplied by the second brightness area brightness average value calculation section 133 and supplies the brightness range of the second brightness area thus set to the output level conversion processing section 135.

The second brightness area brightness range setting section 134 may, for example, set a range of predetermined brightness the midpoint of which is the average brightness of pixels in a range of higher brightness than the brightness range of the main area, as the brightness range of the second brightness area or may establish the brightness range of the second brightness area by taking the pixel with the average brightness of the pixels of the range of higher brightness than the brightness range of the main area as the midpoint and selecting pixels of a predetermined bit count in order starting with the pixel with the closest brightness value to the brightness of the pixel with the average brightness.

In step S6, the output level conversion processing section 135 determines the conversion characteristic for the input level and output level described by using Figs. 6 and 7, for example, based on the brightness range of the main area set by the main area brightness range setting section 132 and the brightness range of the second brightness area set by the second brightness area brightness average value calculation section 133.

In step S7, the output level conversion processing section 135 converts the grayscales of the picked up image supplied by the image pickup section 91 on the basis of the conversion characteristic determined in step S6 and supplies the converted grayscales to the display control section 94.

In step S8, the display control section 94 converts the image signal thus supplied into grayscales suited to the display device as was described using Fig. 8.

In step S9, the display control section 94 supplies the image signal that was converted to grayscales suited to the display device to the display 82 to control the image display, whereupon the processing is terminated.

Here, processing to display the generated image on the display 82 was described. However, in cases where the generated image is output to an external device (not shown) via the output control section 95, processing that is basically the same as that in steps S1 to step S7 is executed such that an image signal is supplied to the output control section 95 where the output is controlled by converting the image signal into grayscales that can be processed by the output destination device.

In cases where, as a result of such processing, image data that have been picked up by the image pickup section 91 that employs the logarithmic conversion-type image pickup device 102 are displayed using grayscales that correspond with the display 82 or in cases where image data are output using grayscales that correspond with an external device constituting the output destination, image data that allow image information required by the user that exist scattered over a wide brightness range to be displayed or printed out in a state where the image can be discriminated by the user can be generated.

For example, in cases where an image of the front of a vehicle that is traveling close to a tunnel exit in a tunnel is picked up and the image thus picked up can be displayed on a display,
(1) an image of wide dynamic range that is picked up by using the image pickup section 91 that employs the logarithmic conversion-type image pickup device 102 is output as a display with the existing grayscale characteristics without being processed by using the image processing apparatus 81 comprising the image generation section 93-1;
(2) an image that is picked up by a normal exposure control of a conventional CCD camera is output as a display without performing image synthesis processing or other processing;
(3) an image of a wide dynamic range that is picked up by using the image pickup section 91 that employs the logarithmic conversion-type image pickup device 102 is processed by using the image processing apparatus 81 having the image generation section 93-1 before being output as a display.

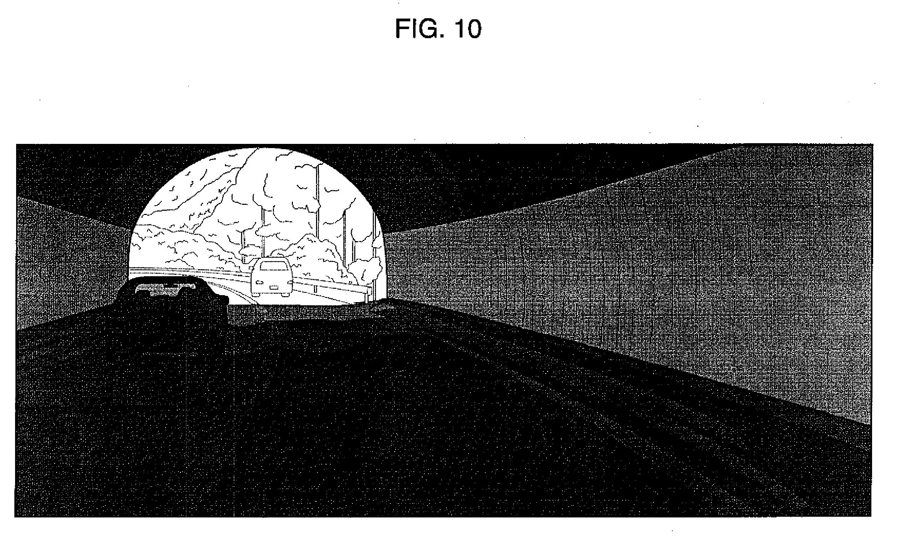

The differences in the display image will now be described with reference to Figs. 10 to 12 under the above conditions.

First, an example of a display image in a case where an image of a wide dynamic range that is picked up by using the image pickup section 91 that employs the logarithmic conversion-type image pickup device 102 is not processed by using the image processing apparatus 81 having the image generation section 93-1 is shown in Fig. 10. The image of a wide dynamic range that is picked up by using the image pickup section 91 that employs the logarithmic conversion-type image pickup device 102 does not produce white-out or black blurring but because an extremely wide dynamic range is converted into grayscales that can be processed by the display device, an image with no difference in shading (no sharpness) is displayed.

Even when the brightness width that is picked up by the logarithmic conversion-type image pickup device 102 is wide, this brightness width is not so wide that the gradation of the image that can be displayed by a general display device can be faithfully displayed. More specifically, for example, pixels that are displayed as different grayscales in an image that is picked up by a CCD that is exposed with the brightness of the road surface taken as a reference, for example, are displayed using the same grayscales or by means of a smaller gradation in the case in Fig. 10 than for cases where a CCD is employed.

Further, even when grayscale conversion is employed between the maximum and minimum values for the brightness of the image pickup range obtained in the dynamic range that can be picked up by the logarithmic conversion-type image pickup device 102, in cases where there is a large difference in brightness in one screen (in the case of Fig. 10, for example, the difference in brightness between the roadway surface in the tunnel and the respective parts outside the tunnel is very large), an image with no difference in shading is similarly displayed.

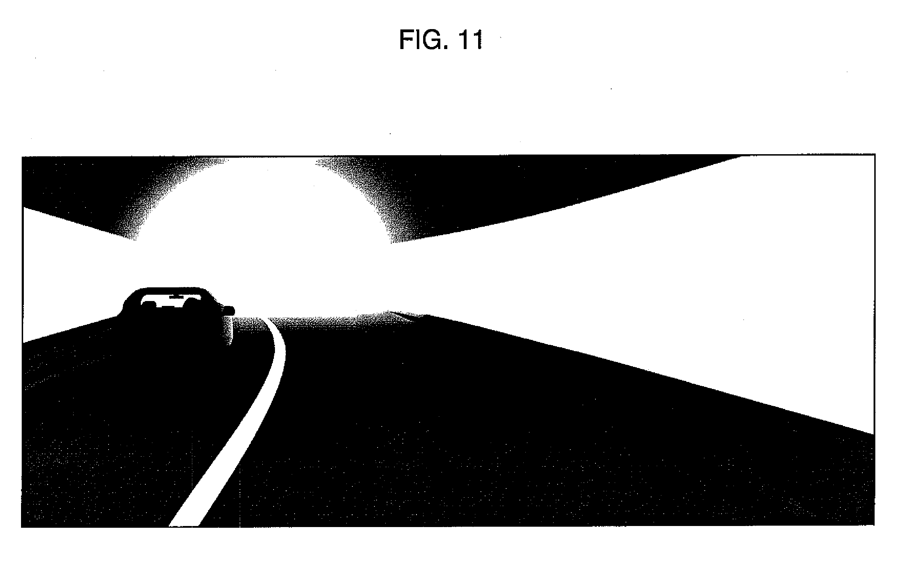

An example of a display image in a case where an image that was picked up using normal exposure control by a conventional CCD camera is displayed is shown next in Fig. 11. For example, when the exposure of the CCD camera is set based on the brightness of the roadway in the tunnel which occupies a large part of the image picked up, as shown in Fig. 11, the image outside the tunnel which is much brighter than the roadway inside the tunnel in the image obtained induces white-out. Further, in cases where the exposure time is extremely short, the parts outside the tunnel do not induce white-out as shown in Fig. 11. However, in comparison with the parts outside the tunnel, black blurring occurs in the parts inside the tunnel of extremely low brightness and discrimination of the corresponding parts of the display image is difficult.

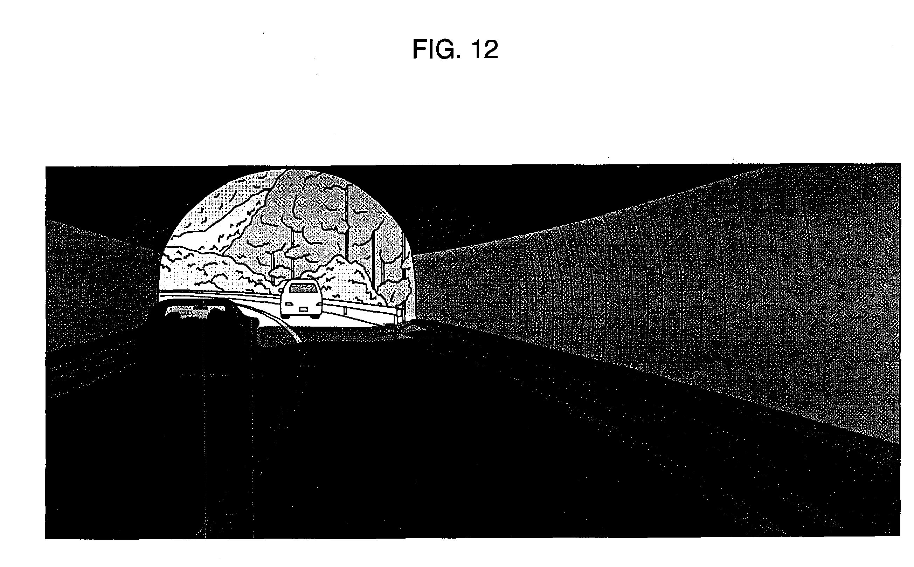

Further, an example of a display image in a case where an image of a wide dynamic range that was picked up by using the image pickup section 91 that employs the logarithmic conversion-type image pickup device 102 is processed using the image processing apparatus 81 having the image generation section 93-1 is shown in Fig. 12. Thus, in cases where an image of the front of a vehicle that is traveling close to a tunnel exit in a tunnel is picked up, the brightness fringe of the roadway part in front of the vehicle is established as the brightness range of the main area. Further, as the majority of the pixels of higher brightness than the main area, the parts outside the tunnel are established as the second brightness area. That is, in image conversion that employs the image processing apparatus 81 comprising the image generation section 93-1, the number of grayscale steps that can be easily identified by the user in the corresponding brightness range outside the tunnel and the corresponding brightness range inside the tunnel in the image picked up is allocated. Therefore, a display image in a case where processing is carried out using the image processing apparatus 81 that comprises the image generation section 93-1 is displayed such that the majority of the image picked up (the whole of the vehicle roadway part here) and the majority of the separate brightness range (here, the part outside the tunnel) is easier for the user to identify than in a case where the description is made using Fig. 10 or 11.

Thus, information required by the user in the image picked up over a wide dynamic range is converted for a display so as to be easily identified by the user, that is, an adequate number of grayscale steps are allocated.

In addition, in cases where the logarithmic conversion-type image pickup device 102 is used, a wide dynamic range image can be obtained by using a single image. Therefore, in cases where an image of a wide dynamic range that is picked up by using the image pickup section 91 that employs the logarithmic conversion-type image pickup device 102 is processed using the image processing apparatus 81 that comprises the image generation section 93-1, the frame rate of a moving image in particular can be easily increased in comparison with a case where an image of a wide dynamic range is obtained by synthesizing an image that is picked up using a different shutter time by using a conventional CCD.

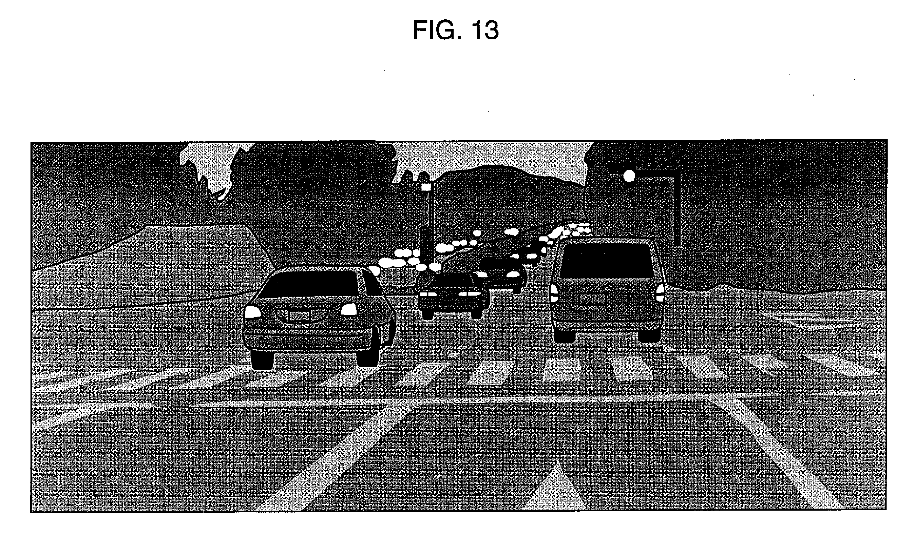

Furthermore, by using the image processing apparatus 81 that comprises the image generation section 93-1 to process an image of a wide dynamic range that is picked up using the image pickup section 91 that employs the logarithmic conversion-type image pickup device 102, even in cases where an image of the front of a vehicle that is traveling along a street at night is picked up and the image thus picked up is displayed on a display, as shown in Fig. 13, an image that contains pixels of brightness values that are discrete from the brightness values of many parts of the scene such as the headlights and tail lamps of other vehicles or streetlamps or the like does not produce white-out or black blurring and it is not hard for the user to identify the required image information due to the pixels of higher brightness of the headlights and tail lamps or streetlamps and so forth. Further, the image is displayed through the allocation of adequate grayscales.

The image generation section 93-1 described above was described as allocating a large number of grayscale step to the brightness range of the main area and the brightness range of the second brightness area which occupies the majority of a range of higher brightness than the brightness range of the main area. In contrast, a case where the set brightness ranges are not the two brightness ranges of the main area and second brightness area respectively will be described.

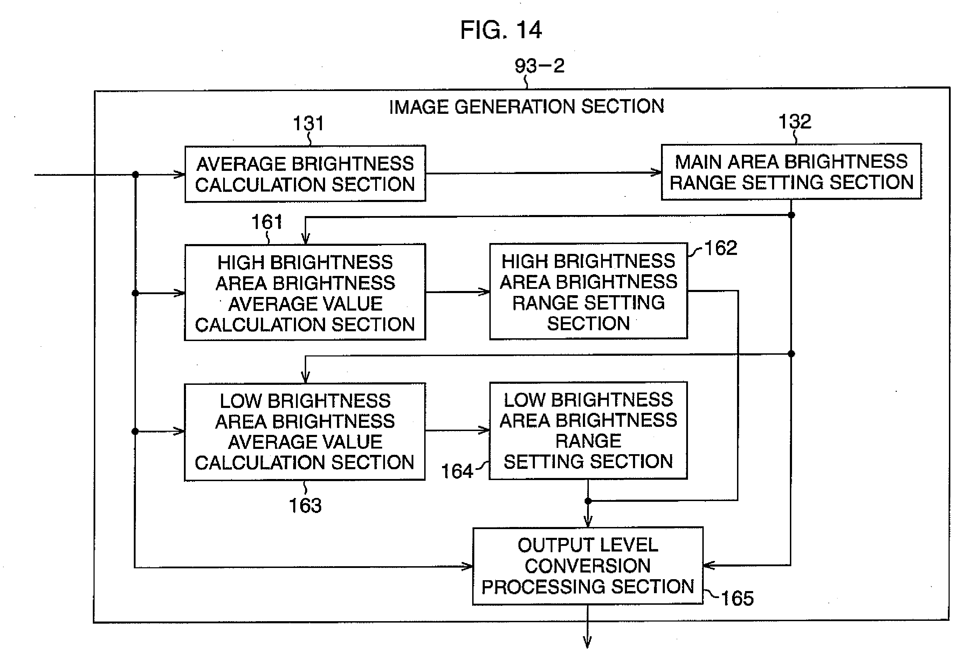

Fig. 14 is a block diagram that shows the constitution of the image generation section 93-2 which is a second example of the constitution of the image generation section 93 of Fig. 2. The image generation section 93-2 sets three brightness areas which, excluding the brightness range of the main area, are the brightness range of the second brightness area which is the main part of a range of higher brightness than the brightness range of the main area and the brightness range of the third brightness area which is the majority of a range of lower brightness than the brightness range of the main area and is able to allocate a large number of grayscale steps to three set brightness areas.

The same symbols are assigned to those parts which correspond to the case of Fig. 5 and a description thereof will be suitably omitted.

In other words, the image generation section 93-2 of Fig. 14 comprises an average brightness calculation section 131 and a main area brightness range setting section 132 which are basically the same as those of the image generation section 93-1 described using Fig. 5. The second brightness area brightness average value calculation section 133 and second brightness area brightness range setting section 134 of the image generation section 93-1 are omitted. A high brightness area brightness average value calculation section 161, a high brightness area brightness range setting section 162, a low brightness area brightness average calculation section 163, and a low brightness area brightness range setting section 164 are newly provided and an output level conversion processing section 165 is provided in place of the output level conversion processing section 135.

The high brightness area brightness average value calculation section 161 acquires the image signal supplied by the image pickup section 91, calculates the average brightness of the pixels in a range of higher brightness than the brightness range of the main area set by the main area brightness range setting section 132 in the acquired image signal and supplies the calculation result to the high brightness area brightness range setting section 162.

The high brightness area brightness range setting section 162 sets the brightness range of the second brightness area which is of a higher brightness than the main area on the basis of the average brightness of the pixels in a range of higher brightness than the brightness range of the main area supplied by the high brightness area brightness average value calculation section 161 and supplies the brightness range of the second brightness area thus set to the output level conversion processing section 165.

The high brightness area brightness range setting section 162 may, for example, adopt a range of a predetermined brightness the midpoint of which is the average brightness of the pixels in a range of higher brightness than the brightness range of the main area as the brightness range of the second brightness area and may establish the brightness range of the second brightness area by taking the pixel with the average brightness of the pixels in a range of higher brightness than the brightness range of the main area as the midpoint and selecting pixels of a predetermined bit count in order starting with the pixel with the closest brightness value to the brightness of the pixel with the average brightness.

The low brightness area brightness average calculation section 163 acquires the image signal supplied by the image pickup section 91, calculates the average brightness of the pixels in a range of lower brightness than the brightness range of the main area set by the main area brightness range setting section 132 in the acquired image signal and supplies the calculation result to the lowbrightness area brightness range setting section 164.

The low brightness area brightness range setting section 164 sets the brightness range of the third brightness area which is of a lower brightness than the main area on the basis of the average brightness of the pixels in a range of lower brightness than the brightness range of the main area supplied by the low brightness area brightness average calculation section 163 and supplies the brightness range of the third brightness area thus set to the output level conversion processing section 165.

The low brightness area brightness range setting section 164 may for example, adopt a range of a predetermined brightness the midpoint of which is the average brightness of the pixels in a range of lower brightness than the brightness range of the main area as the brightness range of the third brightness area and may establish the brightness range of the third brightness area by taking the pixel with the average brightness of the pixels in a range of lower brightness than the brightness range of the main area as the midpoint and selecting pixels of a predetermined bit count in order starting with the pixel with the closest brightness value to the brightness of the pixel with the average brightness.

The output level conversion processing section 165 acquires the image signal supplied by the image pickup section 91 and converts the output level of the acquired image signal on the basis of information on the brightness range of the main area, the brightness range of the second brightness area, and the brightness range of the third brightness area that are supplied by the main area brightness range setting section 132, the high brightness area brightness range setting section 162, and the low brightness area brightness range setting section 164.

More specifically, the output level conversion processing section 165 is able to convert the output level with respect to the input level as shown in Fig. 15A, for example. In other words, the pixels of a lower brightness input level than the third brightness area have an output level of zero (that is, pitch black) irrespective of the input level. Further, predetermined grayscale output levels are allocated in accordance with the input level to pixels in the third brightness area, in the main area, and in the second brightness area. In addition, pixels in the brightness range between the third brightness area and the main area and the brightness range between the main area and the second brightness area are output with an output level that is allocated just before the range irrespective of the input level. Further, an output level which is the maximum value of the output levels allocated to the brightness range of the second brightness area is allocated to pixels of higher brightness than the second brightness area.

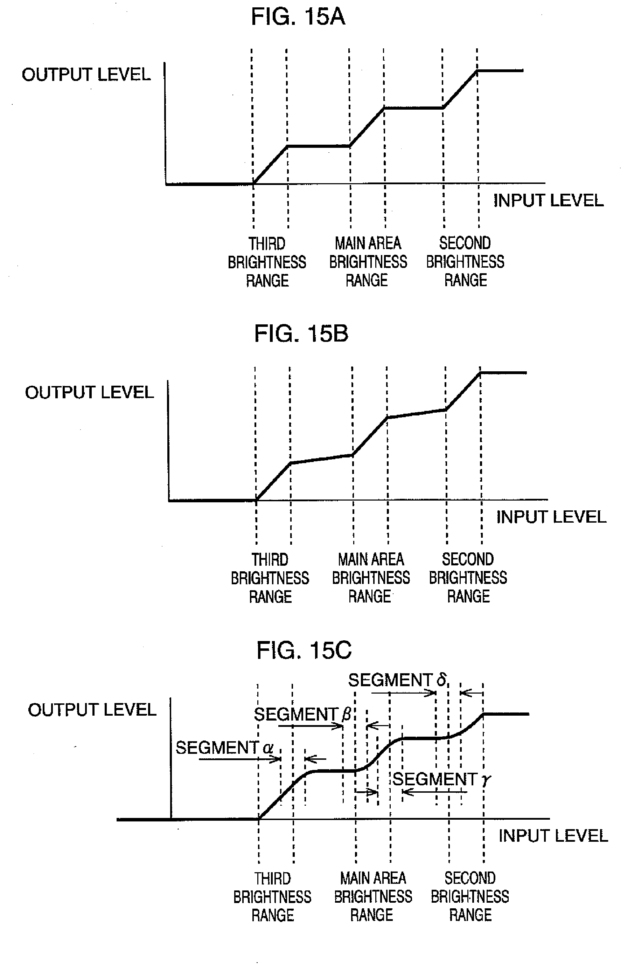

In addition, the output level conversion processing section 165 is able to convert the output level with respect to the input level as shown in Fig. 15B, for example. That is, the pixels of a lower brightness input level than the third brightness area have an output level of zero (that is, pitch black) irrespective of the input level. Further, predetermined grayscale output levels are allocated in accordance with the input level to pixels in the third brightness area, in the main area, and in the second brightness area. In addition, the pixels of the brightness range between the third brightness area and main area and the brightness range between the main area and second brightness area are allocated output levels that correspond with the input level in a smaller number of steps than the number of steps allocated to the main area and so forth. Further, an output level constituting the maximum value of the output level allocated to the second brightness area is allocated to pixels of a higher brightness than the second brightness area.

In addition, the output level conversion processing section 165 is able to convert the output level with respect to the input level as shown in Fig. 15C, for example. That is, the output level conversion processing section 165 adopts, for example, a predetermined brightness range the midpoint of which is the upper limit value of the brightness of the third brightness area as segment α, a predetermined brightness range the midpoint of which is the lower limit value of the brightness of the main area as segment β, a predetermined brightness range the midpoint of which is the upper limit value of the brightness of the main area as segment γ, and a predetermined brightness range the midpoint of which is the lower limit value of the second brightness area as segment 5. Further, the pixels of a lower brightness input level than the third brightness area have an output level of zero (that is, pitch black) irrespective of the input level. Predetermined grayscale output levels are allocated in accordance with the input level to pixels outside segment α which are in the third brightness area, pixels outside segment β or segment γ which are in the brightness range of the main area and pixels outside segment δ which are in the range of the secondbrightness area. In addition, predetermined grayscale output levels with a smaller number of steps than the number of steps allocated to parts outside segments α through δ in the main area brightness area and so forth are allocated to pixels of segments α, β, γ, and δ. Further, an output level which is the maximum value of the output levels allocated to the second brightness range is allocated to the pixels of a higher brightness than the second brightness area.

In Fig. 15C, a predetermined brightness range the midpoint of which is the upper limit value of the brightness of the third brightness area has been adopted as segment α, a predetermined brightness range the midpoint of which is the lower limit value of the brightness of the main area has been adopted as segment β, a predetermined brightness range the midpoint of which is the upper limit value of the brightness of the main area has been adopted as segment γ, and a predetermined brightness range the midpoint of which is the lower limit value of the brightness of the second brightness area has been adopted as segment δ. However, a predetermined brightness range at the upper limit end of the third brightness area may also be adopted as segment α, a predetermined brightness range at the lower limit end of the main area may be adopted as segment β, a predetermined brightness range at the upper limit end of the main area may be adopted as segment γ, and a predetermined brightness range at the lower limit end of the second brightness area may be adopted as segment δ. Alternatively, a predetermined brightness range of higher brightness than the upper limit of the third brightness area may be adopted as segment α, a predetermined brightness range of lower brightness than the lower limit of the main area may be adopted as segment β; a predetermined brightness range of higher brightness than the upper limit of the main area may be adopted as segment γ, and a predetermined brightness range of lower brightness than the lower limit of the second brightness area may be adopted as segment δ. In addition, an area where the same number of output level steps as for segments α and δ is allocated to the lower limit of the brightness of the third brightness area and to the upper limit of the brightness of the second brightness area may also be established.

In addition, a case where the number of output level steps (number of grayscale steps) is not allocated in a range of lower brightness than the third brightness area and higher brightness than the second brightness area is illustrated in Fig. 15. In contrast, the output level conversion processing section 165 may also allocate a smaller number of steps than for the main area, second brightness area, and third brightness area to a range of lower brightness than the third brightness area and a range of higher brightness than the second brightness area, as per the case described using Fig. 7, for example.

In addition, the output level conversion processing section 165 may also determine the number of steps of the grayscales allocated to the respective brightness areas so that the ratio (the tilt of the straight line) of the output levels with respect to the input level in brightness ranges outside the brightness areas of the main area, second brightness area, and third brightness area is lower than the ratio of the output levels with respect to the input level in the main area, second brightness area, and third brightness area, for example.

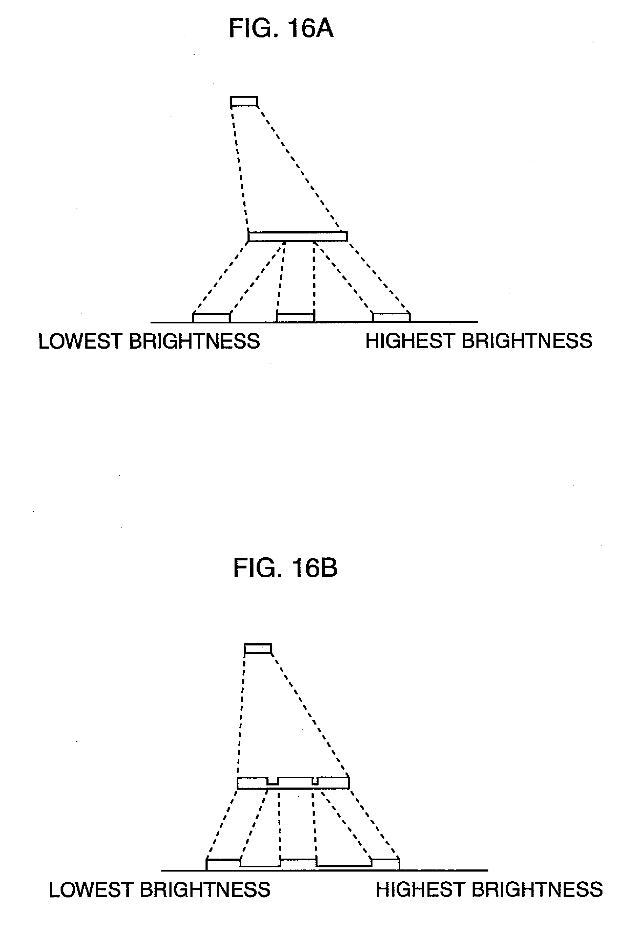

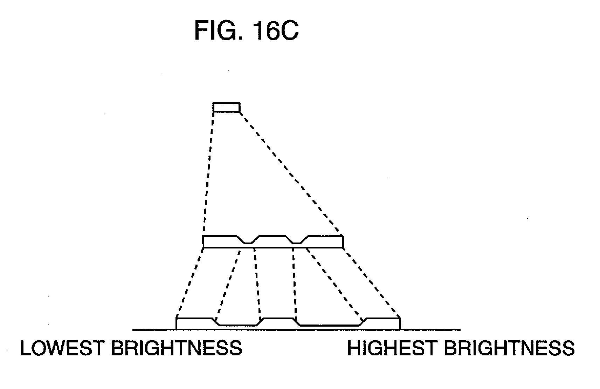

The brightness levels of the input signal, a signal that has undergone grayscale conversion by the output level conversion processing section 165, and the displayed signal will now be described by using Fig. 16.

Fig. 16A shows the brightness levels of an input signal in a case where the grayscale conversion described using Fig. 15A is carried out, of a signal that has undergone grayscale conversion by the output level conversion processing section 165, and of a signal that is output for a display or printout or the like. In the case shown in Fig. 16A, the signals of the main area, second brightness area, and third brightness area which are separate brightness ranges are converted into consecutive brightness grayscales in a state where the brightness grayscale widths of the respective signals are sufficient. The pixels of the brightness range between the main area and the third brightness area are all output at the maximum output level of the third brightness area and the pixels of the brightness range between the main area and the second brightness area are all output at the maximum output level of the main area. Further, the converted signals are then grayscale-converted (the gradation is compressed) in accordance with the display or printout conditions.

Fig. 16B shows the brightness levels of an input signal in a case where the grayscale conversion described using Fig. 15B is carried out, of a signal that has undergone grayscale conversion by the output level conversion processing section 165, and of a signal that is output for a display or printout or the like. In the case shown in Fig. 16B, only grayscales in a smaller number of steps than those for the main area, the second brightness area, and the third brightness area are provided for the areas between the third brightness area and the main area and between the main area and the second brightness area respectively. Hence, even though the number of brightness grayscales for the converted signal is markedly more compressed than for the input signal in proportion to the small number of steps of the area between the third brightness area and the main area and between the main area and second brightness area, the signals of the main area, second brightness area, and third brightness area are provided with an adequate brightness grayscale width. Further, the converted signal is grayscale-converted (the gradation is compressed) in accordance with the conditions for a display or printout.

Fig. 16C shows the brightness levels of an input signal in a case where the grayscale conversion described using Fig. 15C is carried out, of a signal that has undergone grayscale conversion by the output level conversion processing section 165, and of a signal that is output for a display or printout or the like. In the case shown in Fig. 16C, the number of allocated brightness grayscale steps is made to change gradually in the area between the main area, second brightness area, and third brightness area according to the segments α and δ, that is, in the segments α and δ, grayscales of a smaller number of steps than for parts outside segments α and δ of the main area, second brightness area, and third brightness area are provided. Hence, in the case of the converted signal, the number of brightness grayscales is much more compressed than for the input signal in a state where an adequate brightness grayscale width is provided for the main area, second brightness area, and third brightness area. Further, the converted signal is grayscale-converted (the gradation is compressed) in accordance with the conditions for a display or printout.

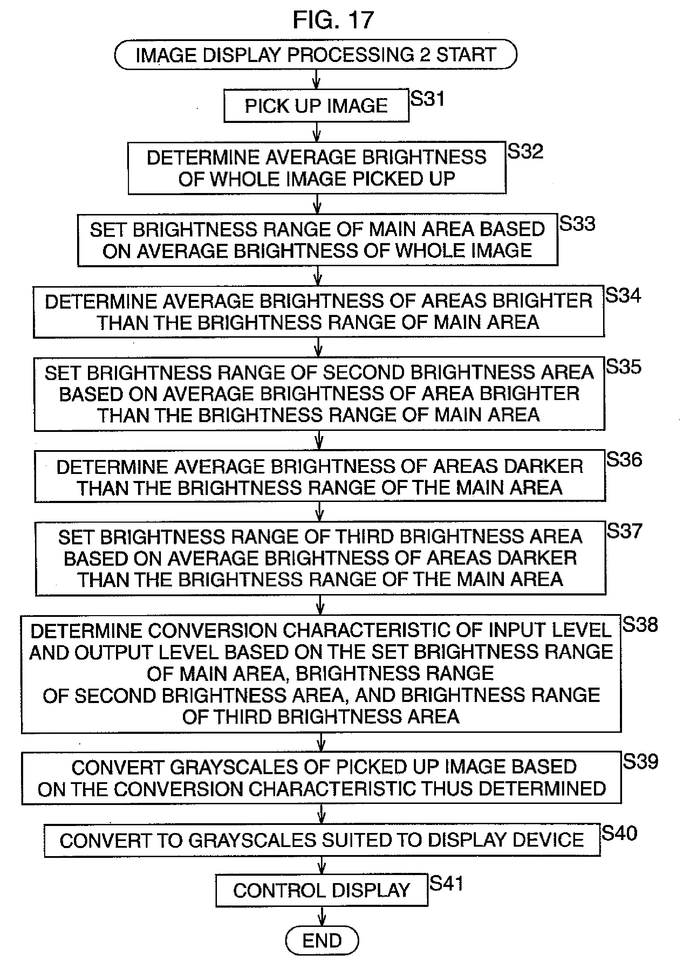

The image display processing 2 that is executed by the image processing apparatus 81 comprising the image generation section 93-2 described in Fig. 14 will be described next with reference to the flowchart in Fig. 17.

In step S31, the image pickup section 91 picks up an image of a photographic object and performs logarithmic conversion thereof on the basis of an operation input by the user that is supplied by the operation input section 92 and supplies the A/D converted image pickup image signal to the image generation section 93-2. The image generation section 93-2 acquires the picked up image signal.

In step S32, the average brightness calculation section 131 of the image generation section 93-2 finds the average brightness of the whole picked up image and supplies the calculation result to the main area brightness range setting section 132.

In step S33, the main area brightness range setting section 132 sets the brightness range of the main area on the basis of the average brightness of the whole image supplied by the average brightness calculation section 131 and supplies the brightness range of the main area thus set to the output level conversion processing section 165, the high brightness area brightness average value calculation section 161, and the low brightness area brightness average calculation section 163.

The main area brightness range setting section 132 may, for example, adopt a range of predetermined brightness the midpoint of which is the average brightness of the image signal as the brightness range of the main area or may establish the brightness range of the main area by taking the pixel with the average brightness of the image signal as the midpoint and selecting pixels of a predetermined bit count in order starting with the pixel with the closest brightness value to the brightness of the pixel with the average brightness.

In step S34, the high brightness area brightness average value calculation section 161 determines the average brightness of an area that is brighter than the brightness range of the main area that was set by the main area brightness range setting section 132 in the image signal supplied by the image pickup section 91 and supplies the calculation result to the high brightness area brightness range setting section 162.

In step S35, the high brightness area brightness range setting section 162 sets the brightness range of a second brightness area based on the average value of the area brighter than the brightness range of the main area that is supplied by the high brightness area brightness average value calculation section 161 and supplies the brightness range of the second brightness area thus set to the output level conversion processing section 165.

The high brightness area brightness range setting section 162 may, for example, adopt a range of predetermined brightness the midpoint of which is the average brightness of the pixels in a range of higher brightness than the brightness range of the main area as the brightness range of the second brightness area or may establish the brightness range of the second brightness area by taking the pixel with the average brightness of the pixels in a range of higher brightness than the brightness range of the main area as the midpoint and selecting pixels of a predetermined bit count in order starting with the pixel with the closest brightness value to the brightness of the pixel with the average brightness.

In step S36, the low brightness area brightness average calculation section 163 determines the average brightness of an area that is darker than the brightness range of the main area that was set by the main area brightness range setting section 132 in the image signal supplied by the image pickup section 91 and supplies the calculation result to the low brightness area brightness range setting section 164.

In step S37, the low brightness area brightness range setting section 164 sets the brightness range of a third brightness area based on the average value of the area darker than the brightness range of the main area that is supplied by the low brightness area brightness average calculation section 163 and supplies the brightness range of the third brightness area thus set to the output level conversion processing section 165.

The low brightness area brightness range setting section 164 may, for example, set a range of predetermined brightness the midpoint of which is the average brightness of pixels in a range of lower brightness than the brightness range of the main area, as the brightness range of the third brightness area or may establish the brightness range of the third brightness area by taking the pixel with the average brightness of the pixels of the range of lower brightness than the brightness range of the main area as the midpoint and selecting pixels of a predetermined bit count in order starting with the pixel with the closest brightness value to the brightness of the pixel with the average brightness.

In step S38, the output level conversion processing section 165 determines the conversion characteristic for the input level and output level described by using Fig. 15, for example, based on the brightness range of the main area set by the main area brightness range setting section 132, the brightness range of the second brightness area set by the high brightness area brightness range setting section 162, and the brightness range of the third brightness area set by the low brightness area brightness range setting section 164.

In step S39, the output level conversion processing section 165 converts the grayscales of the picked up image supplied by the image pickup section 91 on the basis of the conversion characteristic determined in step S39 and supplies the converted grayscales to the display control section 94.

In step S40, the display control section 94 converts the image signal thus supplied into grayscales suited to the display device as was described using Fig. 16.

In step S41, the display control section 94 supplies the image signal that was converted to grayscales suited to the display device to the display 82 to control the image display, whereupon the processing is terminated.

Here, processing to display the generated image on the display 82 was described. However, in cases where the generated image is output to an external device (not shown) via the output control section 95, processing that is basically the same as that in steps S31 to step S39 is executed such that an image signal is supplied to the output control section 95 where the output is controlled by converting the image signal into grayscales that can be processed by the output destination device.

So too in cases where, as a result of such processing, image information required by the user exists in both areas of high brightness and low brightness that are separate from the main brightness area in particular over a wide brightness range in image data that have been picked up by the image pickup section 91 that employs the logarithmic conversion-type image pickup device 102, when such an image is displayed using grayscales that correspond with the display 82 or when the image is output using grayscales that correspond to an output destination external device, image data that can be displayed or printed out in a state where the image can be discriminated by the user can be generated.

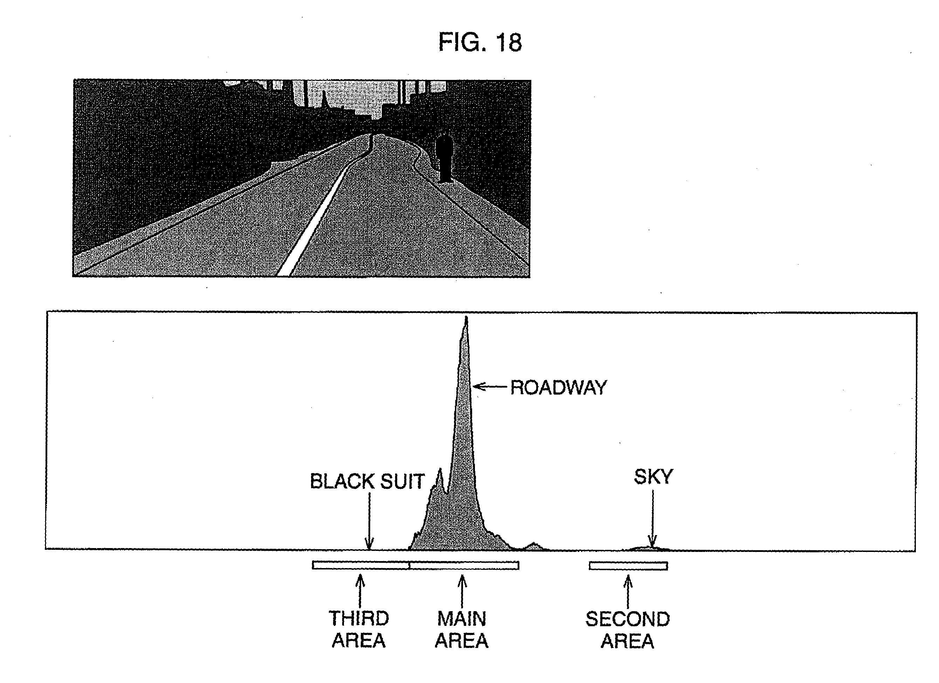

For the image displayed by the image processing apparatus 81 comprising the image generation section 93-2 of Fig. 14, even in a case where the majority of the picked up image is the roadway, the sky part which has a much higher brightness than the brightness of the roadway is contained in the field angle, and where a person wearing a black suit which is of a much lower brightness than the brightness of the roadway is contained in the field angle, as specifically shown in Fig. 18, for example, a large number of grayscale steps are allocated in the vicinity of the brightness corresponding to the roadway, sky, and man wearing a black suit respectively. Therefore, by using the image processing apparatus 81 that comprises the image generation section 93-2 in Fig. 14, a situation where an image which is hard to identify due to white-out of the sky part is displayed and where, despite being picked up, the person wearing the black suit is displayed with black blurring such that same cannot be discriminated by the user can be prevented.

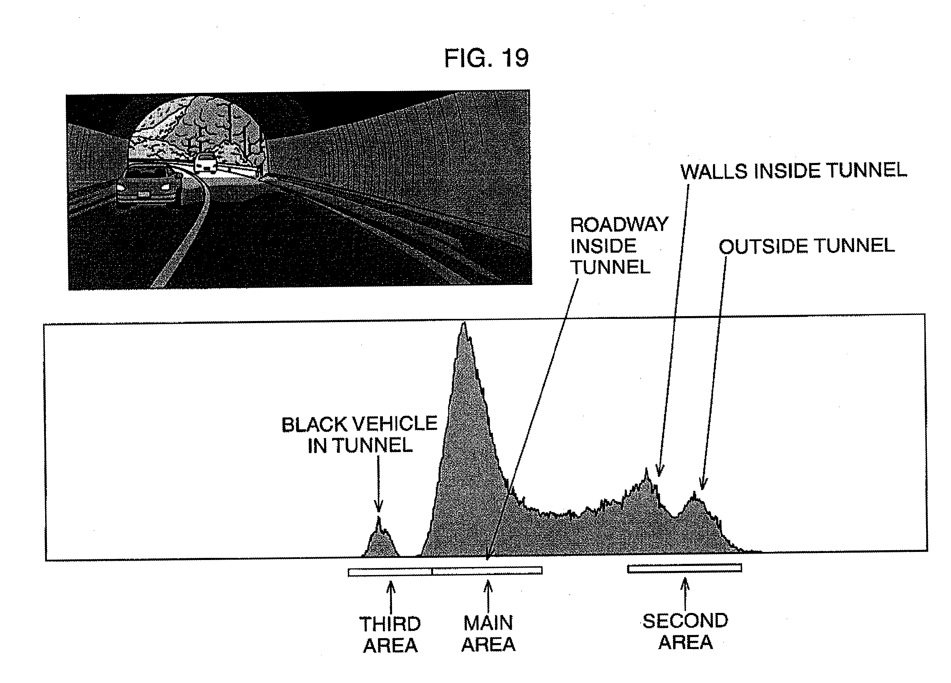

Likewise, for an image that is displayed by the image processing apparatus 81 comprising the image generation section 93-2 in Fig. 14, even in a case where the majority of the image picked up is the dark roadway in the tunnel, the white wall in the tunnel which is of a slightly higher brightness than the brightness of the roadway and parts outside the tunnel of an extremely high brightness are contained in the field angle, and where a black vehicle in the tunnel of a much lower brightness than the brightness of the roadway in the tunnel is contained in the field angle, as specifically shown in Fig. 19, for example, a large number of grayscale steps are allocated in the vicinity of the brightness corresponding with the roadway in the tunnel, the tunnel walls, and a black vehicle outside and inside the tunnel respectively. By using the image processing apparatus 81 comprising the image generation section 93-2 in Fig. 14, a situation where an image that is hard to identify due to the white-out of parts outside the tunnel is displayed and where, despite being picked up, the black vehicle in the tunnel is displayed with black blurring such that same cannot be discriminated by the user can be prevented.

In addition, the image generation section 93 may establish three or more areas and the numbers of grayscale steps allocated to set areas and unset areas can be made different.

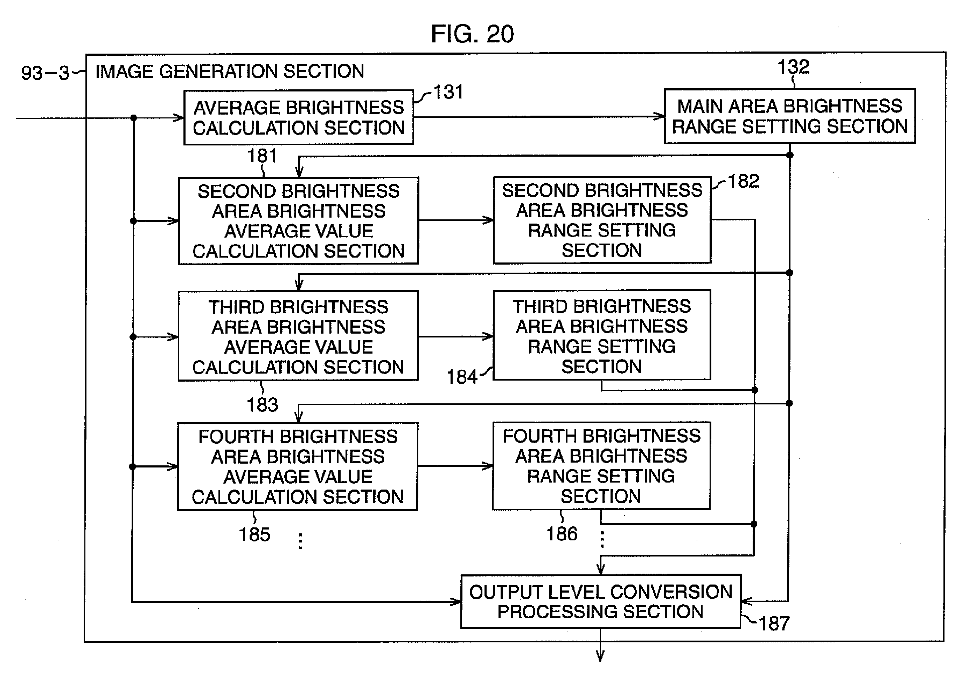

Next, Fig. 20 is a block diagram that shows the constitution of the image generation section 93-3 which is a third example of the constitution of the image generation section 93 in Fig. 2. The image generation section 93-3 sets a plurality of brightness areas and the brightness ranges thereof in addition to the brightness range of the main area and is able to allocate a greater number of grayscale steps to the plurality of brightness ranges thus set than to an unset brightness range.

The same symbols have been assigned to those parts which correspond to the case in Fig. 5 and a description of such parts is suitably omitted.

In other words, the image generation section 93-3 in Fig. 20 comprises an average brightness calculation section 131 and a main area brightness range setting section 132 which are basically the same as those of the image generation section 93-1 described using Fig. 5. The second brightness area brightness average value calculation section 133 and second brightness area brightness range setting section 134 of the image generation section 93-1 are omitted. A second brightness area brightness average value calculation section 181, a second brightness area brightness range setting section 182, a third brightness area brightness average value calculation section 183, a third brightness area brightness range setting section 184, a fourth brightness area brightness average value calculation section 185, and a fourth brightness area brightness range setting section 186 are newly provided and an output level conversion processing section 187 is provided in place of the output level conversion processing section 135.

The second brightness area brightness average value calculation section 181 calculates the average brightness of pixels with a brightness that is contained in a predetermined range outside the brightness range of the main area set by the main area brightness range setting section 132 in the image signal supplied by the image pickup section 91 (further divides a range of higher brightness than the brightness range of the main area into two and establishes the part with the highest brightness of the two divided parts, for example) and supplies the calculation result to the second brightness area brightness range setting section 182.

The second brightness area brightness range setting section 182 sets the brightness range of the second brightness area on the basis of the average brightness of pixels having a brightness that is contained in a predetermined range outside the main area supplied by the second brightness area brightness average value calculation section 181 and supplies the brightness range of the second brightness area thus set to the output level conversion processing section 187.

The second brightness area brightness range setting section 182 may, for example, adopt a range of a predetermined brightness the midpoint of which is the average brightness of pixels having a brightness in a predetermined range as the brightness range of the second brightness area and may establish the brightness range of the second brightness area by taking the pixel with the average brightness of pixels which have a brightness in a predetermined range as the midpoint and selecting pixels of a predetermined bit count in order starting with the pixel with the closest brightness value to the brightness of the pixel with the average brightness.

The third brightness area brightness average value calculation section 183 calculates the average value of pixels having a brightness that is contained in a predetermined range outside the brightness range of the main area set by the main area brightness range setting section 132 in the image signal supplied by the image pickup section 91 (further divides a range of higher brightness than the brightness range of the main area into two and establishes the part with the lowest brightness of the two divided parts, for example) and supplies the calculation result to the third brightness area brightness range setting section 184.

The third brightness area brightness range setting section 184 sets the brightness range of the third brightness area on the basis of the average brightness of pixels having a brightness that is contained in a predetermined range outside the main area supplied by the third brightness area brightness average value calculation section 183 and supplies the brightness range of the third brightness area thus set to the output level conversion processing section 187.

The third brightness area brightness range setting section 184 may, for example, adopt a range of a predetermined brightness the midpoint of which is the average brightness of pixels having a brightness in a predetermined range as the brightness range of the third brightness area and may establish the brightness range of the third brightness area by taking the pixel with the average brightness of pixels which have a brightness in a predetermined range as the midpoint and selecting pixels of a predetermined bit count in order starting with the pixel with the closest brightness value to the brightness of the pixel with the average brightness.

The fourth brightness area brightness average value calculation section 185 calculates the average value of pixels having a brightness that is contained in a predetermined range outside the brightness range of the main area set by the main area brightness range setting section 132 in the image signal supplied by the image pickup section 91 (further divides a range of lower brightness than the brightness range of the main area to establish the part with the lowest brightness of the two divided parts, for example) and supplies the calculation result to the fourthbrightness area brightness range setting section 186.

The fourth brightness area brightness range setting section 186 sets the brightness range of the fourth brightness area on the basis of the average brightness of pixels having a brightness that is contained in a predetermined range outside the main area supplied by the fourth brightness area brightness average value calculation section 185 and supplies the brightness range of the fourth brightness area thus set to the output level conversion processing section 187.

The fourth brightness area brightness range setting section 186 may, for example, adopt a range of a predetermined brightness the midpoint of which is the average brightness of pixels having a brightness in a predetermined range as the brightness range of the fourth brightness area and may establish the brightness range of the fourth brightness area by taking the pixel with the average brightness of pixels which have a brightness in a predetermined range as the midpoint and selecting pixels of a predetermined bit count in order starting with the pixel with the closest brightness value to the brightness of the pixel with the average brightness.

The output level conversion processing section 187 acquires the image signal supplied by the image pickup section 91 and converts the output level of the acquired image signal on the basis of information on the brightness range of the main area, the brightness range of the second brightness area, the brightness range of the third brightness area, and the brightness range of the fourth brightness area that are supplied by the main area brightness range setting section 132, the second brightness area brightness range setting section 182, the third brightness area brightness range setting section 184, and the fourth brightness area brightness range setting section 186.

The output level conversion processing section 187 allocates an output level signal of a predetermined number of steps to the level of the brightness signal thus input (signals of respective brightness grayscale levels in cases where the brightness is divided by a predetermined number of grayscale steps) so that the signals of the allocated output levels are output. Here, the output level conversion processing section 187 differentiates the allocation of brightness grayscale levels for the output level signal between the brightness ranges set for the main area and other ranges as per the case described using Figs. 6, 7, or 15, for example. In other words, the output level conversion processing section 187 executes conversion processing to establish a large gradation for the pixels of the corresponding brightness range by allocating a greater number of output level steps than for the brightness ranges set for the main area and the other areas. Thus, the parts of the brightness ranges corresponding with the image that is displayed or printed out can be better identified by the user.

Fig. 20 illustrates the second brightness area brightness average value calculation section 181, second brightness area brightness range setting section 182, third brightness area brightness average value calculation section 183, third brightness area brightness range setting section 184, fourth brightness area brightness average value calculation section 185, and fourth brightness area brightness range setting section 186 for setting the second through fourth brightness areas in addition to the main area but the image generation section 93-3 may further comprise another brightness area brightness average value calculation section and brightness area brightness range setting section so that a multiplicity of brightness areas can be set.

In addition, the processing executed by the image generation section 93-3 in Fig. 20 is basically the same as the processing of the image display processing 2 described using Fig. 17 and corresponds to a case where the number of set areas is increased. Hence, a corresponding description is omitted here.

The image generation section 93-1 to image generation section 93-3 described hereinabove are constituted to set the main area on the basis of the average value of the brightness of the whole image picked up. In contrast, the main area may also be set on the basis of the average value of the brightness of the pixels contained in a preset area in the image picked up.

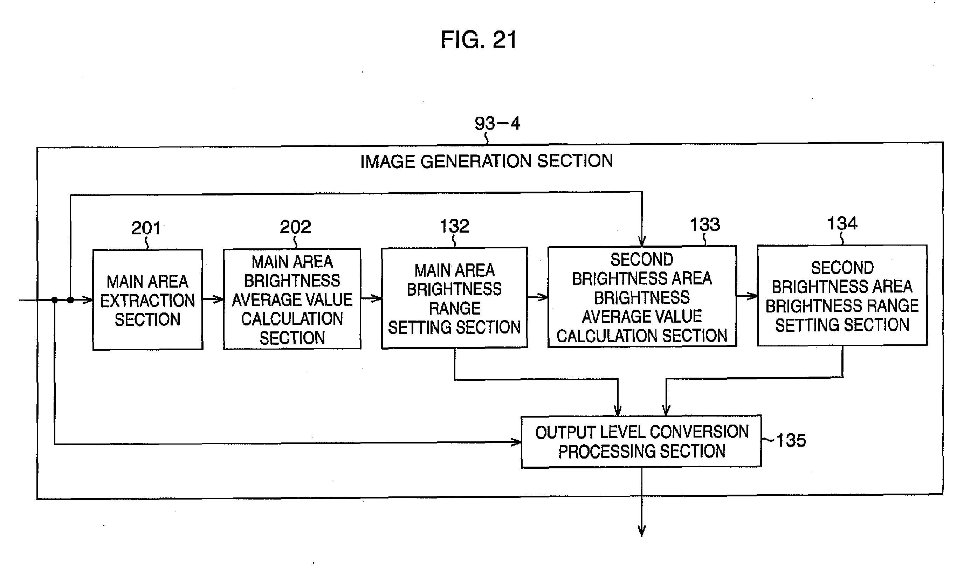

Fig. 21 is a block diagram showing the constitution of an image generation section 93-4 which is a fourth example of the constitution of the image generation section 93 in Fig. 2. The image generation section 93-4 extracts the pixels contained in a preset area in the image picked up and sets the main area based on the average value of the brightness of the extracted area.

The same reference symbols are assigned to parts that correspond to the case in Fig. 5 and a description thereof is omitted.

That is, the image generation section 93-4 in Fig. 21 basically has the same constitution as that of the image generation section 93-1 in Fig. 5 except for the fact that a main area extraction section 201 and a main area brightness average value calculation section 202 are provided in place of the average brightness calculation section 131.

The main area extraction section 201 acquires an image signal that is supplied by the image pickup section 91, extracts a preset image area in the acquired image signal, and supplies the pixels of the extracted area to the main area brightness average value calculation section 202.

For example, in cases where an image of the front of a vehicle that is traveling along is picked up and the image picked up is displayed on a display, the image that is picked up and displayed during travel is always changing. Thus, in cases where the main area is set by using the average value of the whole image picked up by the traveling vehicle, when very bright or very dark parts enter the field angle, the brightness range of the main area is changed and the brightness of the whole displayed image is changed. As a result, the brightness of the roadway and so forth that occupies the majority of the display screen is abruptly changed and there is the possibility of flicker in the brightness of the display image perceived by the driver.

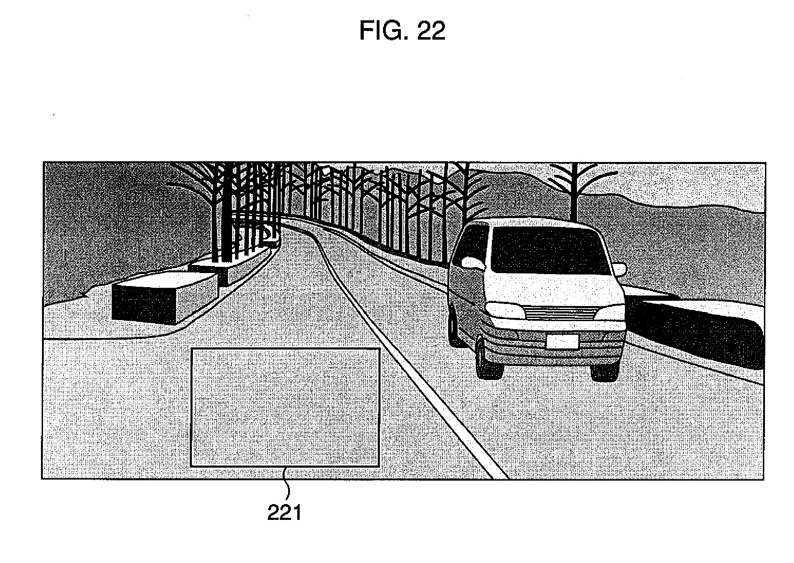

Therefore, suppose that the area of the image that is extracted by the main area extraction section 201 is the lower area 221 that is in the middle and slightly to the left of the screen, for example, in which the roadway is expected to be picked up at regular intervals as shown in Fig. 22. By adopting an area in which the same scene is expected to be picked up at regular intervals as the extracted area, the brightness of the display of the roadway occupying the main part of the displayed image can be kept substantially constant and, therefore, frequent flicker of the brightness of the display image sensed by the driver can be prevented.

The main area brightness average value calculation section 202 calculates the average brightness of the pixels of the extracted area supplied by the main area extraction section 201 and supplies the average brightness calculation result is supplied to the main area brightness range setting section 132.

Further, the image generation section 93-4 in Fig. 21 sets the brightness range of the main area on the basis of the average brightness of the extracted area that is calculated by the main area brightness average value calculation section 202 and sets the brightness range of the second brightness area of a range of higher brightness than the brightness range of the main area on the basis of the brightness range of the main area. Further, steps of multiple output levels are allocated by means of the output level conversion processing section 135 in accordance with the brightness ranges set for the main area and second brightness area and, similarly to the case described using Figs. 6 to 8, there are multiple gradations for the pixels of the corresponding brightness ranges, and conversion processing such that the parts of the corresponding brightness ranges of the image that are displayed or printed out can be easily identified by the user.

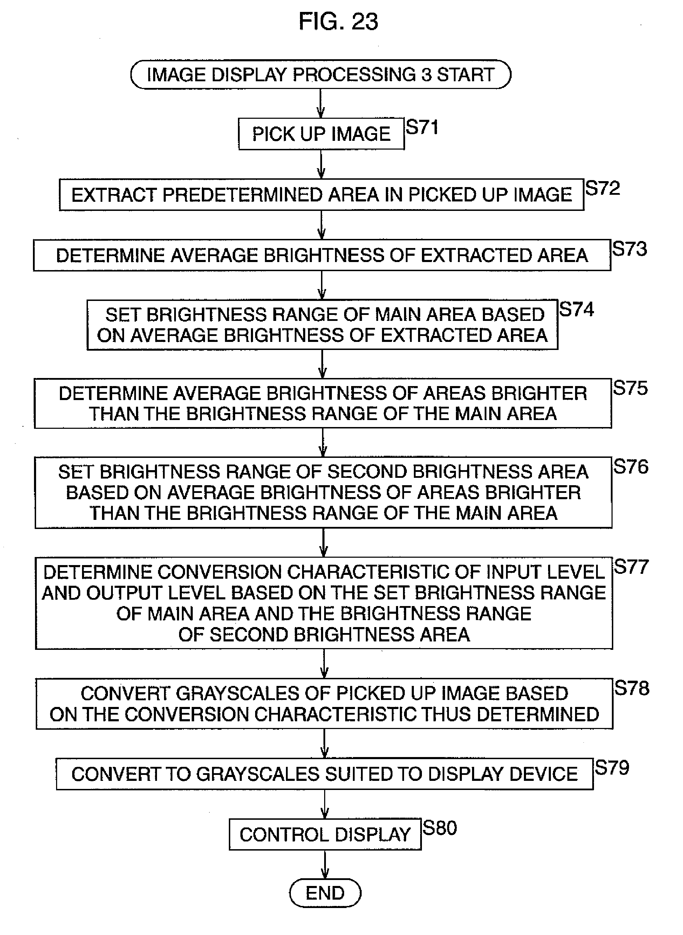

Image display processing 3 that is executed by the image processing apparatus 81 used by the image generation section 93-4 in Fig. 21 will be described next with reference to the flowchart in Fig. 23.

In step S71, the image pickup section 91 picks up an image of a photographic object based on an operation input by the user that is supplied from the operation input section 92, performs logarithmic conversion, and supplies the A/D converted image pickup signal to the image generation section 93-4. The image generation section 93-4 acquires the picked up image signal.

In step S72, the main area extraction section 201 of the image generation section 93-4 extracts a preset image area as described using Fig. 22, for example, in the image signal supplied by the image pickup section 91 and supplies the pixels of the extracted area to the main area brightness average value calculation section 202.

In step S73, the main area brightness average value calculation section 202 determines the average brightness of the pixels of the extracted area thus supplied by the main area extraction section 201 and supplies the calculation result to the main area brightness range setting section 132.

In step S74, the main area brightness range setting section 132 sets the brightness range of the main area on the basis of the average brightness of the pixels of the extracted area supplied by the main area brightness average value calculation section 202 and supplies the brightness range of the main area thus set to the output level conversion processing section 135 and the second brightness area brightness average value calculation section 133.

Further, processing that is basically the same as that in steps S2 to step S9 in Fig. 9 is executed in steps S75 to S80.

That is, the second brightness area brightness average value calculation section 133 determines the average brightness of an area that is brighter than the brightness range of the main area in the image signal supplied by the image pickup section 91 and the second brightness area brightness range setting section 134 establishes a brightness range for the second brightness area on the basis of the average brightness of an area that is brighter than the brightness range of the main area.

Further, the output level conversion processing section 135 determines the conversion characteristic for the input level and output level described by using Figs. 6 and 7, for example, based on the brightness range of the main area and the brightness range of the second brightness area and converts the grayscales of the picked up image supplied by the image pickup section 91 on the basis of the conversion characteristic and supplies the converted grayscales to the display control section 94. The display control section 94 converts the supplied image signal into grayscales suited to the display device as described using Fig. 8 and supplies the converted image signal to the display 82 to control the image display, whereupon the processing is terminated.

Here, processing to display the generated image on the display 82 will be described. However, in cases where the generated image is output to an external device (not shown) via the output control section 95, basically the same processing is executed in steps S71 to step S78, an image signal is supplied to the output control section 95, and an output that is converted into grayscales that can be processed by the output destination device is controlled.

As a result of this processing, in cases where image data picked up by the image pickup section 91 that employs the logarithmic conversion-type image pickup device 102 are to be displayed using grayscales that correspond with the display 82 or where the image data are to be output using grayscales that correspond with an external device constituting the output destination, image data that allow image information required by the user that exist scattered over a wide brightness range to be displayed or printed out in a state where the image can be discriminated by the user can be generated. Further, because the brightness range to which a multiplicity of grayscales are allocated is established by taking a predetermined area as a reference, frequent flicker in the brightness of the display image in cases where a moving image in particular is displayed can be prevented.

The image generation section 93-4 described hereinabove was described as a component that extracts a predetermined area in a picked up image to establish the brightness range of the main area on the basis of the pixels of the extracted area and allocates a multiplicity of numbers of grayscale steps to the brightness ranges of the second brightness area which is the majority of a range of higher brightness than the brightness range of the main area. In contrast, a case where the brightness ranges thus set are not the two brightness ranges of the main area and second brightness area respectively will be described.

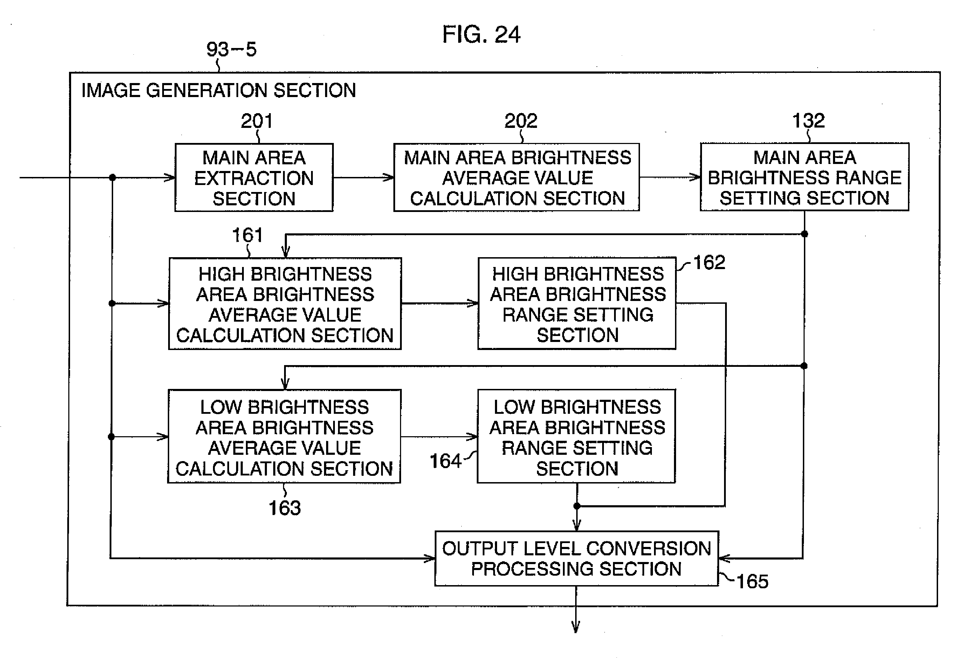

Thereafter, Fig. 24 is a block diagram showing the constitution of the image generation section 93-5 which is a fifth example of the constitution of the image generation section 93 in Fig. 2. The image generation section 93-5 extracts a predetermined area in the picked up image to establish the brightness range of the main area on the basis of the pixels of the extracted area and establishes three brightness areas which are, in addition to the brightness range of the main area, the brightness range of the second brightness area which is the majority of a range of higher brightness than the brightness range of the main area and the brightness range of the third brightness area which is the majority of a range of lower brightness than the brightness range of the main area, and is able to allocate a greater number of grayscale steps to the three brightness areas thus established.

The same reference symbols are assigned to those parts which correspond to the cases of Fig. 14 or 21 and a description of these parts is suitably omitted.

That is, the image generation section 93-5 in Fig. 24 comprises the main area extraction section 201 and main area brightness average value calculation section 202 which are the same as for the case described using Fig. 21 and the main area brightness range setting section 132, high brightness area brightness average value calculation section 161, high brightness area brightness range setting section 162, low brightness area brightness average calculation section 163, low brightness area brightness range setting section 164, and output level conversion processing section 165 as per the case described using Fig. 14 are provided.

As per the image generation section 93-4 described using Fig. 21, the image generation section 93-5 of Fig. 24 extracts a predetermined area in the picked up image to establish the brightness range of the main area on the basis of the pixels of the extracted area and, as per the image generation section 93-2 described using Fig. 14, establishes three brightness areas which are, in addition to the brightness range of the main area, the brightness range of the second brightness area which is the majority of a range of higher brightness than the brightness range of the main area and the brightness range of the third brightness area which is the majority of a range of lower brightness than the brightness range of the main area, and is able to allocate a greater number of grayscale steps to the three brightness areas thus established.

More specifically, in cases where part which are much darker than the brightness of the whole image are in the picked up image and where a pedestrian wearing black clothes at night, for example, is contained in the field angle, the clear display of a photographic object which is hard for the user to confirm with the naked eye is desirable. In cases where an image of the front of a vehicle that is traveling along is picked up and the picked up image is displayed on a display as mentioned earlier in particular, a display image that allows the driver to clearly identify the pedestrian wearing black clothes at night is desirably generated from the picked up image signal picked up using a wide dynamic range is desirable. Hence, by adopting an area in which the reflected light amount is expected to change as a result of the peripheral brightness and in which the same scene is expected to be picked up at regular intervals as the extracted area, information required by the driver can be displayed in a state of being easily identified by the driver while screen flicker is prevented.

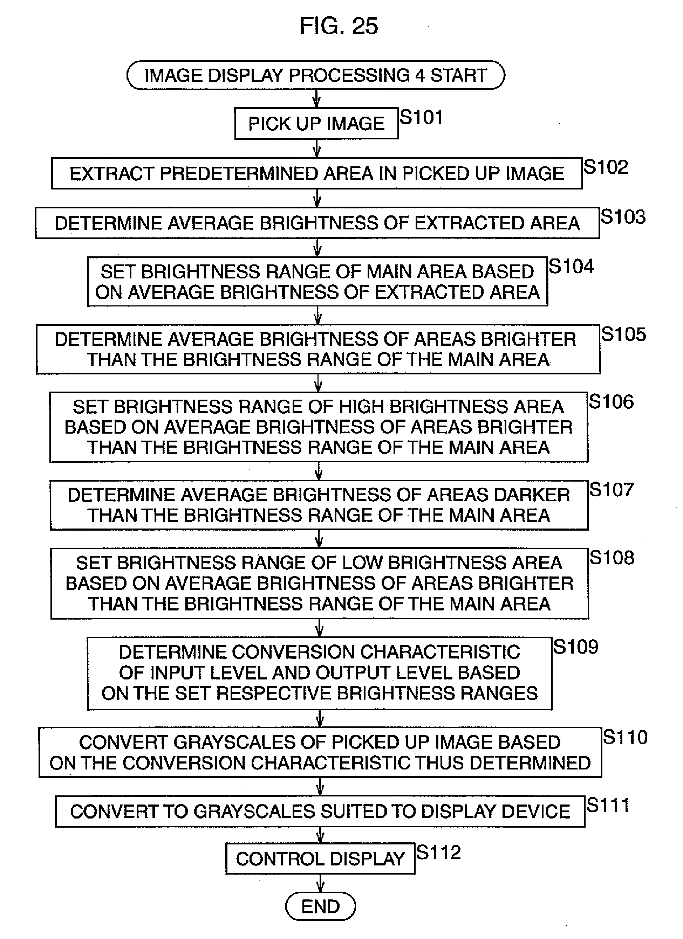

Image display processing 4 that is executed by the image processing apparatus 81 that comprises the image generation section 93-5 in Fig. 24 will now be described with reference to the flowchart in Fig. 25.

Processing that is basically the same as steps S71 to S73 in Fig. 23 is executed in steps S101 to S103.

That is, the image pickup section 91 picks up a photographic object and performs logarithmic conversion thereof based on an operation input by the user that is supplied by the operation input section 92 and supplies the A/D converted image pickup image signal to the image generation section 93-5. The image generation section 93-5 acquires the picked up image signal. The main area extraction section 201 of the image generation section 93-5 extracts a preset image area as described using Fig. 22, for example, in the image signal supplied by the image pickup section 91 and supplies the pixels of the extracted area to the main area brightness average value calculation section 202. The main area brightness average value calculation section 202 determines the average brightness of the pixels of the extracted area thus supplied by the main area extraction section 201 and supplies the calculation result to the main area brightness range setting section 132.

In step S104, the main area brightness range setting section 132 sets the brightness range of the main area on the basis of the average brightness of the pixels of the extracted area supplied by the main area brightness average value calculation section 202 and supplies the brightness range of the main area thus set to the output level conversion processing section 165, the high brightness area brightness average value calculation section 161, and the low brightness area brightness average calculation section 163.

Further, processing that is basically the same as that in steps S34 to step S41 in Fig. 17 is executed in steps S105 to S112.

That is, the high brightness area brightness average value calculation section 161 determines the average brightness of an area that is brighter than the brightness range of the main area in the image signal supplied by the image pickup section 91 and the high brightness area brightness range setting section 162 establishes a brightness range for the second brightness area on the basis of the average brightness of an area that is brighter than the brightness range of the main area and supplies the brightness range of the second brightness area thus set to the output level conversion processing section 165.

Further, the low brightness area brightness average calculation section 163 determines the average brightness of an area that is darker than the brightness range of the main area in the image signal supplied by the image pickup section 91 and the low brightness area brightness range setting section 164 establishes a brightness range for the third brightness area on the basis of the average brightness of an area that is darker than the brightness range of the main area and supplies the brightness range of the third brightness area thus set to the output level conversion processing section 165.

Further, the output level conversion processing section 165 determines the conversion characteristic for the input level and output level described by using Fig. 15, for example, based on the brightness range of the main area, the brightness range of the second brightness area, and the brightness range of the third brightness area, and converts the grayscales of the picked up image supplied by the image pickup section 91 on the basis of the conversion characteristic thus determined and supplies the converted grayscales to the display control section 94. The display control section 94 converts the supplied image signal into grayscales suited to the display device as described using Fig. 16 and supplies the image signal that was converted into grayscales suited to the display device to the display 82 to control the image display, whereupon the processing is terminated.

Processing to display the generated image on the display 82 is also described here. However, in cases where the image thus generated is output to an external device (not shown) via the output control section 95, processing that is basically the same is executed in steps S101 to S110, an image signal is supplied to the output control section 95 and an output that is converted into grayscales that can be processed by the output destination device is controlled.

As a result of this processing, in cases where, in image data picked up by the image pickup section 91 that employs the logarithmic conversion-type image pickup device 102, image information required by the user exist over a wide brightness range and, in particular, both in areas of high brightness and low brightness that are separate from the main area, when such an image is to be displayed using grayscales that correspond with the display 82 or where the image is to be output using grayscales that correspond with an external device constituting the output destination, image data that allow the image to be displayed or printed out in a state where the image can be discriminated by the user can be generated. Further, because three brightness areas to which a multiplicity of grayscales are allocated is established by taking a predetermined area as a reference, frequent flicker in the brightness of the display image in cases where a moving image in particular is displayed can be prevented.

The image generation section 93 may extract three or more areas in a picked up image to establish three or more areas on the basis of the pixels of the extracted area. Further, the image generation section 93 is able to differentiate the grayscale step numbers allocated to set areas and unset areas.

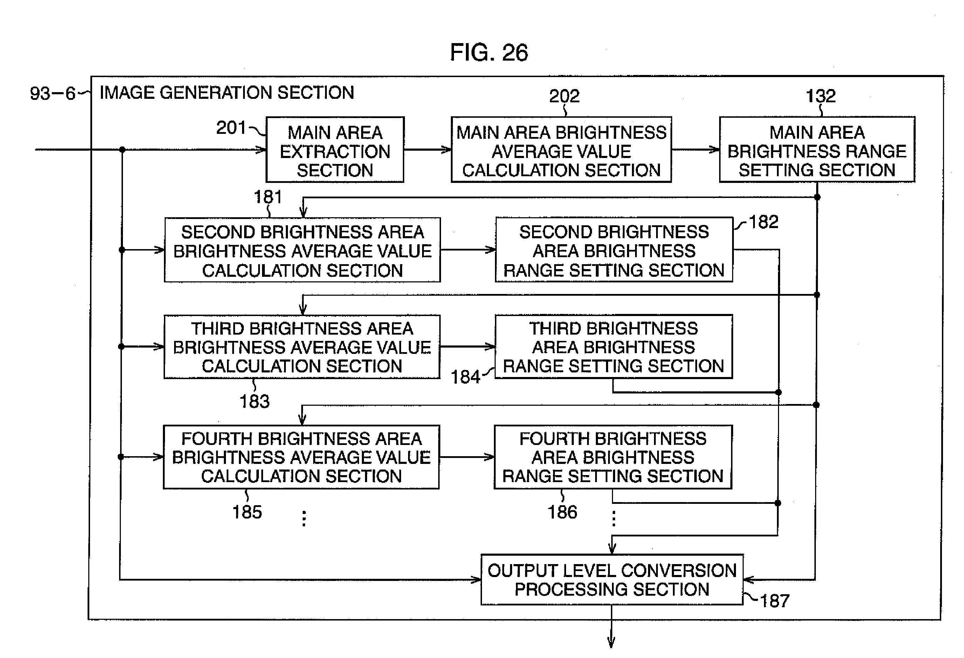

Therefore, Fig. 26 is a block diagram showing the constitution of an image generation section 93-6 which is a sixth example of the constitution of the image generation section 93 in Fig. 2. The image generation section 93-6 extracts a predetermined area in the picked up image to establish the brightness range of the main area on the basis of the pixels of the extracted area and establish the corresponding brightness ranges of a plurality of brightness areas in addition to the brightness range of the main area and is able to allocate a greater number of grayscale steps to the plurality of set brightness ranges than outside the set ranges.

The same reference numerals are assigned to parts corresponding with the parts of Fig. 20 or Fig. 21 and a description of such parts as been suitably omitted.

In other words, the image generation section 93-6 in Fig. 26 is provided with the same main area extraction section 201 and main area brightness average value calculation section 202 as the case described using Fig. 21 and is provided with the main area brightness range setting section 132, second brightness area brightness average value calculation section 181, second brightness area brightness range setting section 182, third brightness area brightness average value calculation section 183, third brightness area brightness range setting section 184, fourth brightness area brightness average value calculation section 185, fourth brightness area brightness range setting section 186, and output level conversion processing section 187 which are the same as the case described using Fig. 20.

As per the image generation section 93-4 described using Fig. 21, the image generation section 93-6 in Fig. 26 extracts predetermined areas in the picked up image to establish the brightness range of the main area on the basis of the pixels of the extracted area and, as per the image generation section 93-3 described using Fig. 20, is constituted to be able to set the respective brightness ranges of a plurality of brightness areas in addition to the brightness range of the main area and allocate greater numbers of grayscale steps to the plurality of set brightness ranges than outside the set ranges.

Fig. 26 illustrates the second brightness area brightness average value calculation section 181, second brightness area brightness range setting section 182, third brightness area brightness average value calculation section 183, third brightness area brightness range setting section 184, fourth brightness area brightness average value calculation section 185, and fourth brightness area brightness range setting section 186 for setting second to fourth brightness areas in addition to the main area and the image generation section 93-3 may further comprise other brightness area brightness average value calculation sections and brightness area brightness range setting sections to allow a multiplicity of brightness areas to be established.

In addition, the processing that is executed by the image generation section 93-6 in Fig. 26 is basically the same as the processing of the image display processing 4 described using Fig. 25 and corresponds to a case where the number of set areas is increased. Hence, a description of this processing is omitted here.

The image generation section 93-1 to image generation section 93-6 described hereinabove were constituted to set the main area on the basis of the average value of the brightness of the whole picked up image or of a predetermined part thereof. In contrast, a histogram that represents the distribution of the brightness values of the pixels contained in the picked up image may be created and, through analysis thereof, a plurality of brightness ranges may be set and a greater number of grayscale steps than outside the set ranges can be allocated to the set brightness ranges.

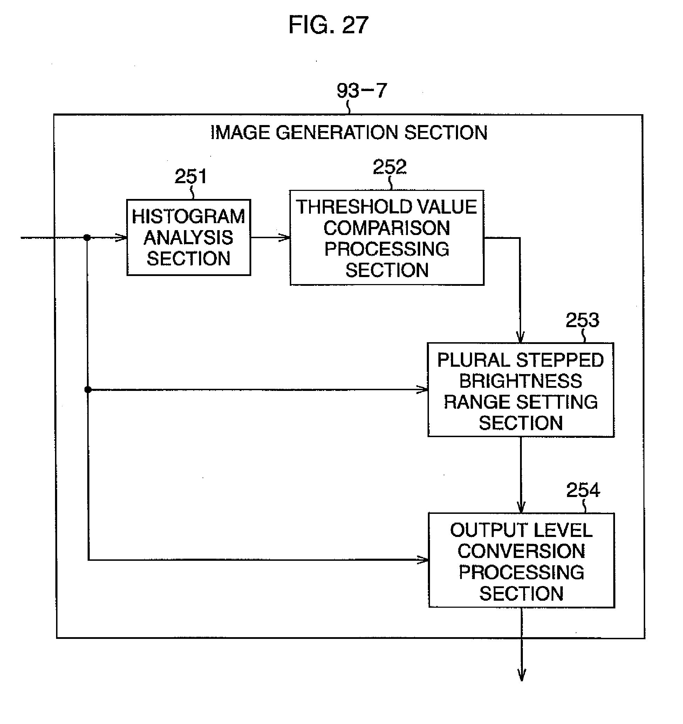

Fig. 27 is a block diagram that shows the constitution of an image generation section 93-7 which is a seventh example of the constitution of the image generation section 93 in Fig. 2. The image generation section 93-7 analyzes the histogram of the brightness values of the respective pixels of the picked up image and sets a plurality of brightness ranges on the basis of the analysis result.

The image generation section 93-7 is constituted by a histogram analysis section 251, a threshold value comparison processing section 252, a plural stepped brightness range setting section 253, and an output level conversion processing section 254.

The histogram analysis section 251 acquire image signals that are supplied by the image pickup section 91, generates and analyzes a histogram that represents the distribution of the brightness values of the respective pixels of the picked up image on the basis of the image signals thus acquired, and supplies the analysis result to the threshold value comparison processing section 252.

The threshold value comparison processing section 252 compares the number of pixels corresponding with the respective brightness values of the input signals with a predetermined threshold value on the basis of the analysis result of the histogram supplied by the histogram analysis section 251. In other words, the threshold value comparison processing section 252 extracts those brightness values having a number of pixels equal to or more than a fixed number in the brightness range of the picked up image. The threshold value comparison processing section 252 supplies, as a result of the comparison with the threshold value, information indicating the brightness values for which the number of pixels is judged to be equal to or more than the threshold value to the plural stepped brightness range setting section 253.

Here, the threshold value may be a value that can be suitably established by the user which is preset after being found through experimentation. In cases where the threshold value is set too low, most of the information remains and, therefore, the obtained image is then an image with no difference in shading (no sharpness) as per a display image in a case where the image of a wide dynamic range that was picked up by using the logarithmic conversion-type image pickup device 102 is not processed using the image processing apparatus 81 that was described using Fig. 10, for example. On the other hand, in cases where the threshold value is set too high, much information is lost and there is the possibility that only a partial brightness range will be displayed clearly.

The plural stepped brightness range setting section 253 sets a plurality of brightness ranges to which a greater number of grayscale steps are allocated than outside the set range on the basis of brightness values for which the number of pixels is judged to be equal to or more than the threshold value that are supplied by the threshold value comparison processing section 252 and supplies the set brightness ranges to the output level conversion processing section 254. The number of brightness ranges set by the plural stepped brightness range setting section 253 is determined by the comparison result supplied by the threshold value comparison processing section 252 but the upper limit of this number may also be preset, for example.

The output level conversion processing section 254 acquires the image signal supplied by the image pickup section 91 and, based on the information on the set brightness ranges that is supplied by the plural stepped brightness range setting section 253, converts the output levels of the acquired image signals such that the number of steps of the brightness grayscale levels of the output level signals allocated to the set brightness areas is greater than the number of steps of the brightness grayscale levels of the output level signals allocated to the other brightness areas, basically as per the cases described using Figs. 6 and 7 or Fig. 15, for example.

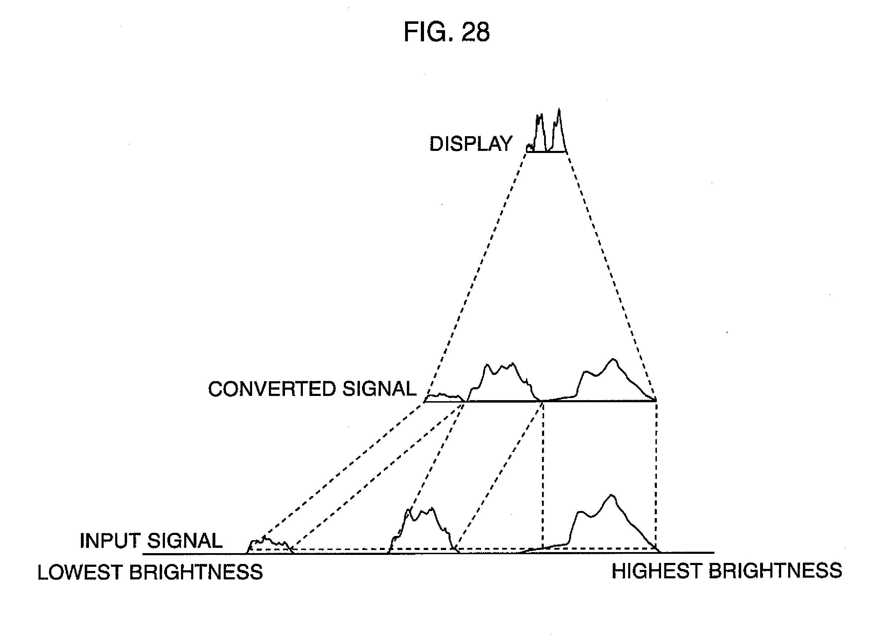

More specifically, as shown in Fig. 28, in the image generation section 93-7, a histogram that indicates the distribution of the brightness values of the respective pixels of the picked up image is analyzed by histogram analysis section 251 and compared with the threshold value by the threshold value comparison processing section 252 such that brightness of a number of pixels equal to or more than the threshold value in the same image (within one frame) is extracted. Further, a plurality of brightness ranges are established by the plural stepped brightness range setting section 253 based on the extracted brightness and the conversion characteristic of the output level with respect to the input level is determined such that the numbers of grayscale steps within these ranges are allocated as a priority by the output level conversion processing section 254 such that adequate brightness grayscale widths for each of the set brightness ranges are provided. The converted signals are then grayscale-converted (the gradation is compressed) and output for a display or printout in accordance with the conditions for a display or printout by the display control section 94 or output control section 95.

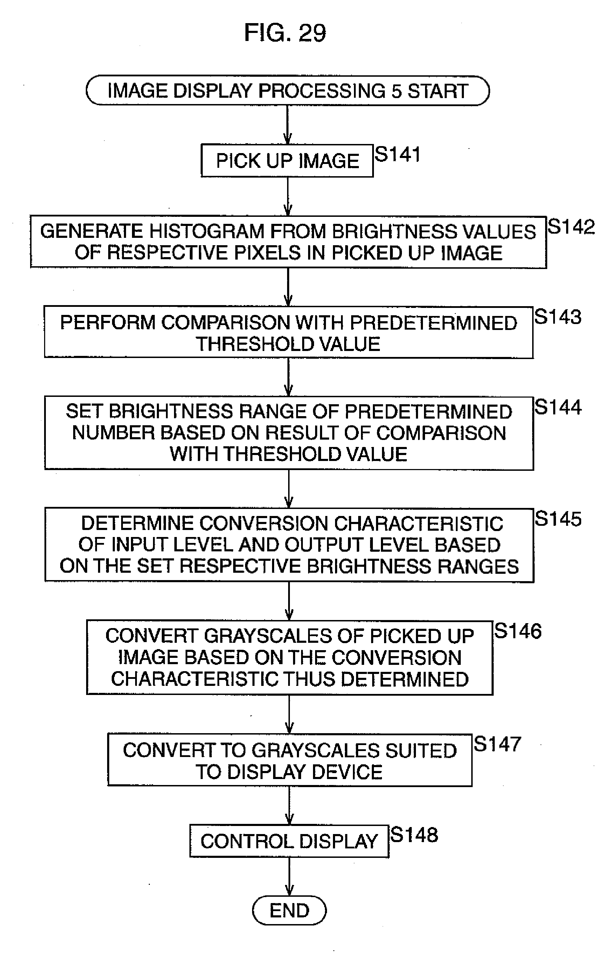

Thereafter, image display processing 5 that is executed by the image processing apparatus 81 used by the image generation section 93-7 in Fig. 27 will now be described with reference to the flowchart in Fig. 29.

In step S141, the image pickup section 91 picks up an image of a photographic object and performs logarithmic conversion thereof on the basis of an operation input by the user that is supplied by the operation input section 92 and supplies the A/D converted image pickup image signal to the image generation section 93-7. The image generation section 93-7 acquires the picked up image signal.

In step S142, the histogram analysis section 251 of the image generation section 93-7 generates and analyzes a histogram that represents the distribution of the brightness of the respective pixels of the picked up image on the basis of the image signals supplied by the image pickup section 91, and supplies the analysis result to the threshold value comparison processing section 252.

In step S143, the threshold value comparison processing section 252 compares the number of pixels corresponding with the respective brightness values of the input signals with a predetermined threshold value on the basis of the analysis result of the histogram supplied by the histogram analysis section 251. The threshold value comparison processing section 252 supplies information indicating brightness values for which it is judged, as a result of the comparison with the threshold value, that the number of pixels is equal to or more than the threshold value, to the plural stepped brightness range setting section 253.

Instep S144, the plural steppedbrightness range setting section 253 sets a plurality of brightness ranges to which a greater number of grayscale steps are allocated than outside the set range on the basis of brightness values for which the number of pixels is judged to be equal to or more than the threshold value that are supplied by the thresholdvalue comparison processing section 252 and supplies the set brightness ranges to the output level conversion processing section 254.

In step S145, the output level conversion processing section 254 determines the conversion characteristic for the input level and output level basically in the same way as the case described by using Figs. 6 and 7, or 15 for example, based on information on the set brightness ranges supplied by the plural stepped brightness range setting section 253.

In step S146, the output level conversion processing section 254 converts, based on the conversion characteristic for the input level and output level, the output levels of the image signals supplied by the image pickup section 91 such that the number of steps of the brightness grayscale levels of the output level signals allocated to the set plurality of brightness ranges is greater than the number of steps of the brightness grayscale levels of the output level signals allocated to the other brightness ranges and supplies the converted output levels to the control section 94.

In step S147, the display control section 94 converts the image signal thus supplied into grayscales suited to the display device as was described using Fig. 28.

In step S148, the display control section 94 supplies the image signal that was converted into grayscales suited to the display device to the display 82 to control the image display, whereupon the processing is terminated.

Here also, processing to display the generated image on the display 82 was described. However, in cases where the generated image is output to an external device (not shown) via the output control section 95, processing that is basically the same as that in steps S141 to step S146 is executed such that an image signal is supplied to the output control section 95 where the output is controlled by converting the image signal into grayscales that can be processed by the output destination device.

In cases where, as a result of such processing, image information required by the user that exists scattered over a wide brightness range are present in the image data that have been picked up by the image pickup section 91 that employs the logarithmic conversion-type image pickup device 102, by processing the image by using the image processing apparatus 81 used by the image generation section 93-7 in Fig. 27, the processed image can be displayed or printed out in a state where the image can be discriminated by the user when the image is displayed using grayscales that correspond with the display 82 or output using grayscales that correspond with an external device constituting the output destination.

The image generation section 93-1 to image generation section 93-7 described hereinabove established brightness areas to which a large number of grayscale steps were allocated based on an image that is picked up. However, brightness areas to which a large number of grayscale steps are allocated may also be preset. For example, brightness areas to which a large number of grayscale steps are allocated can be preset in cases where the brightness areas of the pixels corresponding with the image information required by the user are known beforehand in the picked up image as a result of the field angle in the image picked up being fixed and the photographic object being irradiated with fixed lighting. As a result, the processing can be simplified and the costs of the apparatus can be reduced.

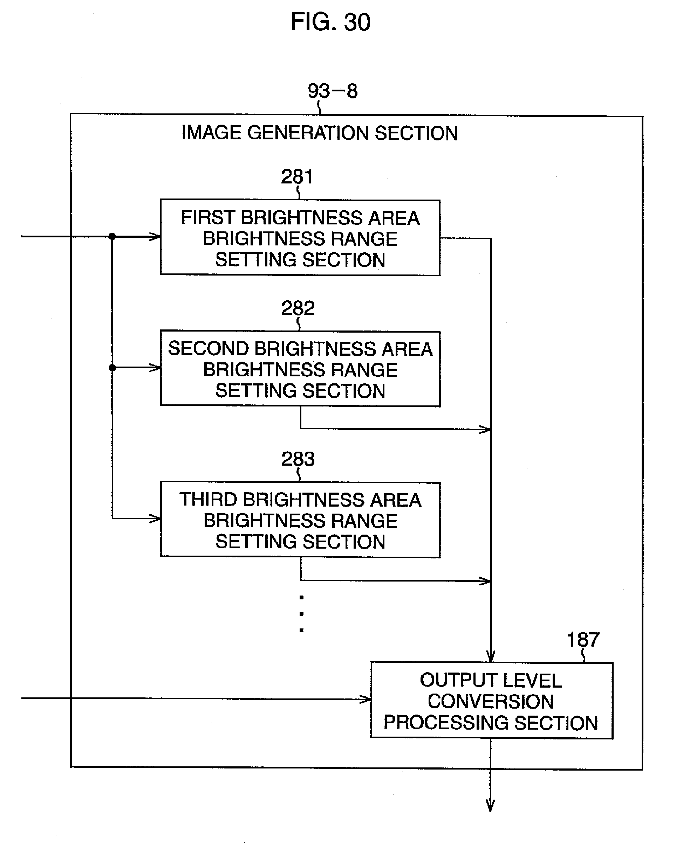

Fig. 30 is a block diagram showing the constitution of the image generation section 93-8 which is an eighth example of the constitution of the image generation section 93 in Fig. 2. The image generation section 93-8 is used in cases where the brightness areas to which a large number of grayscale steps is allocated are preset.

A first brightness area brightness range setting section 281 receives an input of a set value for the brightness range of the first brightness area from the operation input section 92 and supplies the set value of the first brightness range to the output level conversion processing section 187.

The second brightness area brightness range setting section 282 receives an input of a set value for the brightness range of the second brightness area from the operation input section 92 and supplies the set value for the brightness range of the second brightness area to the output level conversion processing section 187.

A third brightness area brightness range setting section 283 receives an input of a set value for the brightness range of the third brightness area from the operation input section 92 and supplies the set value for the brightness range of the third brightness area to the output level conversion processing section 187.

The output level conversion processing section 187 executes processing that is basically the same as that for the case of the image generation section 93-3 in Fig. 20 and acquires the image signal supplied by the image pickup section 91 and converts the output level thereof based on the plurality of set brightness ranges. That is, the output level conversion processing section 187 converts the output levels of the image signals supplied by the image pickup section 91 based on information on the first brightness range, the brightness range of the second brightness area, and the brightness range of the third brightness area which is supplied by the first brightness area brightness range setting section 281, second brightness area brightness range setting section 282, and third brightness area brightness average value calculation section 283.

Fig. 30 illustrates the first brightness area brightness range setting section 281, second brightness area brightness range setting section 282, third brightness area brightness average value calculation section 283 for setting the brightness ranges of the first to third brightness areas but the image generation section 93-8 may also comprise another brightness area brightness range setting section so that settings for the brightness ranges of a multiplicity of brightness areas can be received.

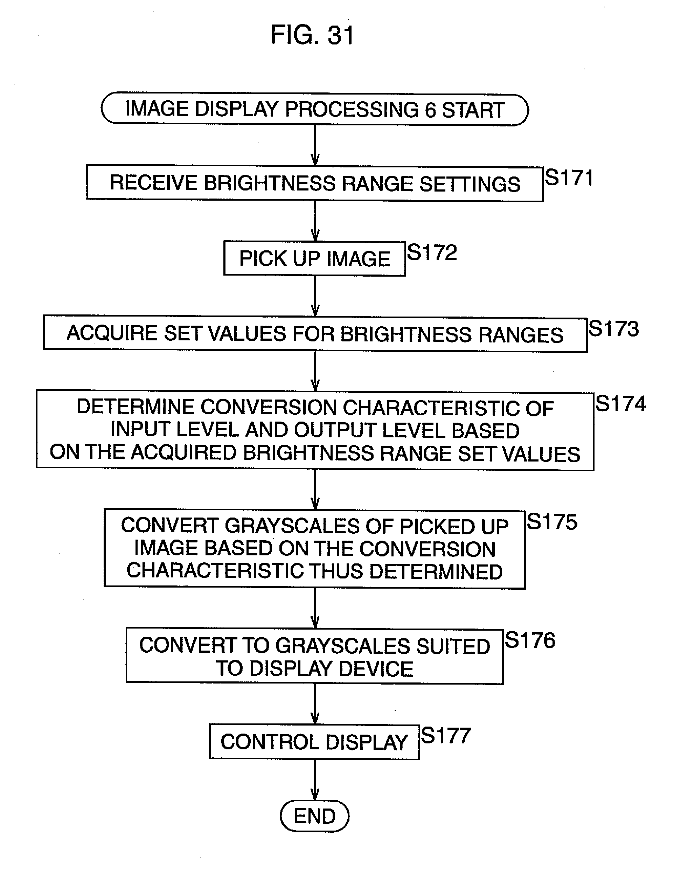

Image display processing 6 that is executed by the image processing apparatus 81 used by the image generation section 93-8 in Fig. 30 will be described next with reference to the flowchart in Fig. 31.

In step S171, the operation input section 92 receives an input of a set value for a plurality of brightness ranges from the user and supplies the input set values to the image generation section 93-8.

In step S172, the image pickup section 91 picks up an image of a photographic object and performs logarithmic conversion thereof on the basis of an operation input by the user that is supplied by the operation input section 92 and supplies the A/D converted image pickup image signal to the image generation section 93-8. The image generation section 93-8 acquires the picked up image signal.

In step S173, the first brightness area brightness range setting section 281, second brightness area brightness range setting section 282, and third brightness area brightness range setting section 283 of the image generation section 93-8 acquire the set values of a plurality of brightness ranges supplied by the operation input section 92 and supply the set values to the output level conversion processing section 187.

In step S174, the output level conversion processing section 187 determines the conversion characteristic for the input level and output level described by using Figs. 6 and 7 or Fig. 15, for example, based on the set values for the plurality of brightness ranges supplied by the first brightness area brightness range setting section 281, second brightness area brightness range setting section 282, and third brightness area brightness range setting section 283.

In step S175, the output level conversion processing section 187 converts the grayscales of the picked up image supplied by the image pickup section 91 on the basis of the conversion characteristic determined in step S174 and supplies the converted grayscales to the display control section 94.

In step S176, the display control section 94 converts the image signal thus supplied into grayscales suited to the display device as was described using Fig. 8 and Fig. 16, for example.

In step S177, the display control section 94 supplies the image signal that was converted to grayscales suited to the display device to the display 82 to control the image display, whereupon the processing is terminated.

Here also, processing to display the generated image on the display 82 was described. However, in cases where the generated image is output to an external device (not shown) via the output control section 95, processing that is basically the same as that in steps S171 to step S175 is executed such that an image signal is supplied to the output control section 95 where the output is controlled by converting the image signal into grayscales that can be processed by the output destination device.

In cases where, as a result of such processing, image data picked up by the image pickup section 91 that employs the logarithmic conversion-type image pickup device 102 are to be displayed using grayscales that correspond with the display 82 or where the image data are to be output using grayscales that correspond with an external device that constitutes the output destination, if the brightness areas of the pixels corresponding with the image information required by the user are known beforehand, by pre-setting the brightness areas to which large numbers of grayscale steps are allocated, image data that allow the image information required by the user to be displayed or printed out in a state where same can be discriminated by the user can be generated using simple processing and the costs of the apparatus can be reduced.

In addition, a histogram that represents the distribution of the brightness values of pixels contained in an image that is picked up in preset brightness areas may be analyzed and the brightness possessing a number of pixels of a fixed number or more in the brightness range determined may be extracted so that it is possible to determine brightness areas to which a large number of grayscale steps are allocated on the basis of the extraction result.

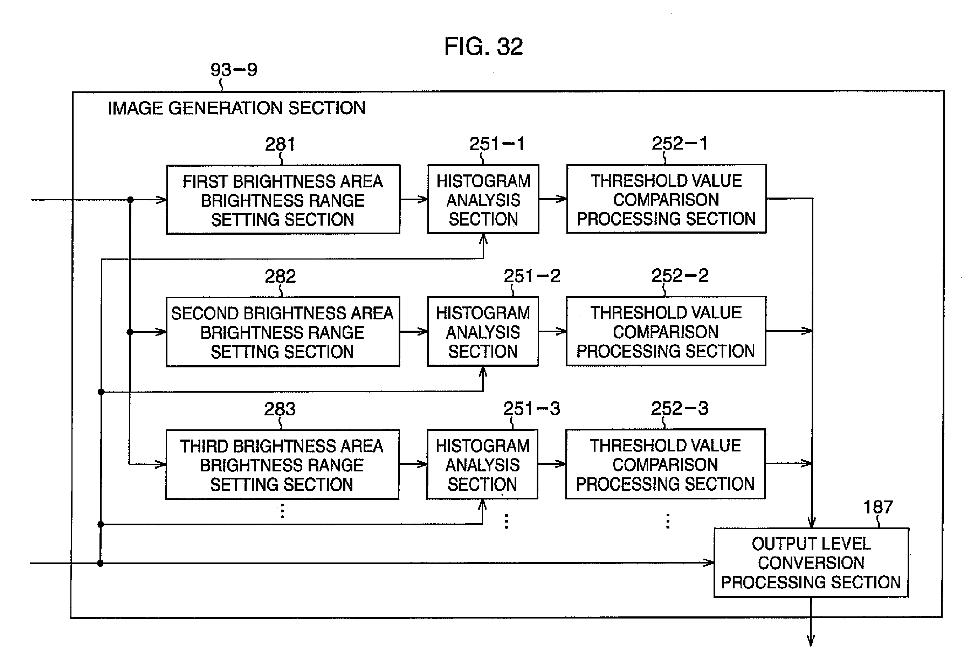

Fig. 32 is a block diagram showing the constitution of an image generation section 93-9 which is a ninth example of the constitution of the image generation section 93 in Fig. 2. The image generation section 93-9 is constituted to extract brightness that possesses a number of pixels of a fixed number ormore through histogram analysis within preset brightness areas and, based on the extraction result, determine brightness areas to which a large number of grayscale steps have been allocated.

The same reference numerals have been allocated to parts that correspond with the case in Fig. 27 or 30 and a description of such parts has been suitably omitted here.

That is, the image generation section 93-9 in Fig. 32 comprises the first brightness area brightness range setting section 281, second brightness area brightness range setting section 282, third brightness area brightness range setting section 283, and output level conversion processing section 187 of the image generation section 93-8 described using Fig. 30. The image generation section 93-9 can further comprise histogram analysis sections 251-1 to 251-3 and threshold value comparison processing sections 252-1 to 252-3 which are capable of executing the same processing as the histogram analysis section 251 and threshold value comparison processing section 252 which are provided in the image generation section 93-7 described using Fig. 27 in order to analyze the histogram based on the set values for the brightness ranges that are output by each of the aforementioned setting sections and perform a comparison with the predetermined threshold values.

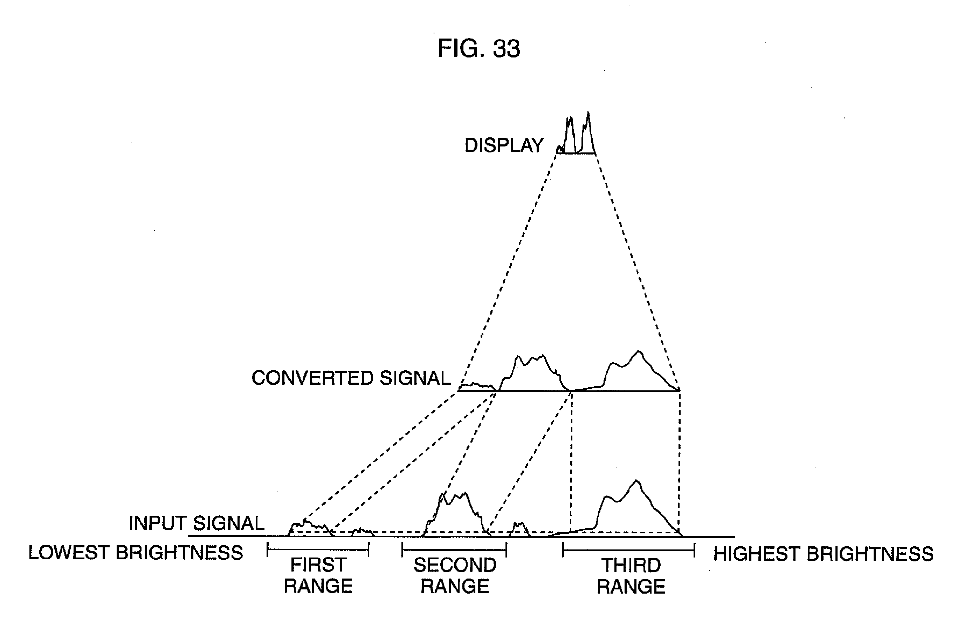

More specifically, in the image generation section 93-9, as shown in Fig. 33, the histogram of brightness values of the respective pixels of the image picked up is analyzed by the histogram analysis sections 251-1 to 251-3 in a first range that is set by the first brightness area brightness range setting section 281, a second range that is set by the second brightness area brightness range setting section 282, and a third range that is set by the third brightness area brightness range setting section 283 respectively, whereupon the number of pixels of the brightness is compared with the threshold value in the threshold value comparison processing sections 252-1 to 252-3 and brightness having a number of pixels equal to or more than a predetermined threshold value is extracted.

That is, even when there exists brightness that has a greater number of pixels than the threshold value in brightness ranges other than the first range, second range, and third range, this brightness is not set for brightness ranges for which the allocation of the number of grayscale steps is prioritized.

Further, in a state where, based on the extracted brightness, the number of grayscale steps are allocated to the pixels in such ranges as a priority in the output level conversionprocessing section 187 and where adequate brightness grayscale widths are provided for each of the set brightness ranges, conversion to successive brightness grayscales is effected. Further, the converted signals are grayscale-converted (the gradation is compressed) and output for a display or printout in accordance with conditions for a display or printout in the display control section 94 or output control section 95.

For example, the brightness areas of the pixels corresponding with the image information required by the user are known beforehand in the picked up image as a result of the field angle in the image picked up being fixed and the photographic object being irradiated with fixed lighting. However, in cases where the brightness area of the pixels corresponding with the image information required by the user varies with time with some kind of pattern, for example, for the same brightness area, there is sometimes a lot of information during the daytime and barely any information in the evening, or a lot of information in the evening and at night but barely any information in the morning or during the daytime.

In such a case, even when all the brightness areas that may contain image information required by the user are preset, the prioritized allocation of the number of grayscale steps to brightness areas that do not have the required information can be avoided by performing histogram analysis and a comparison with the threshold value.

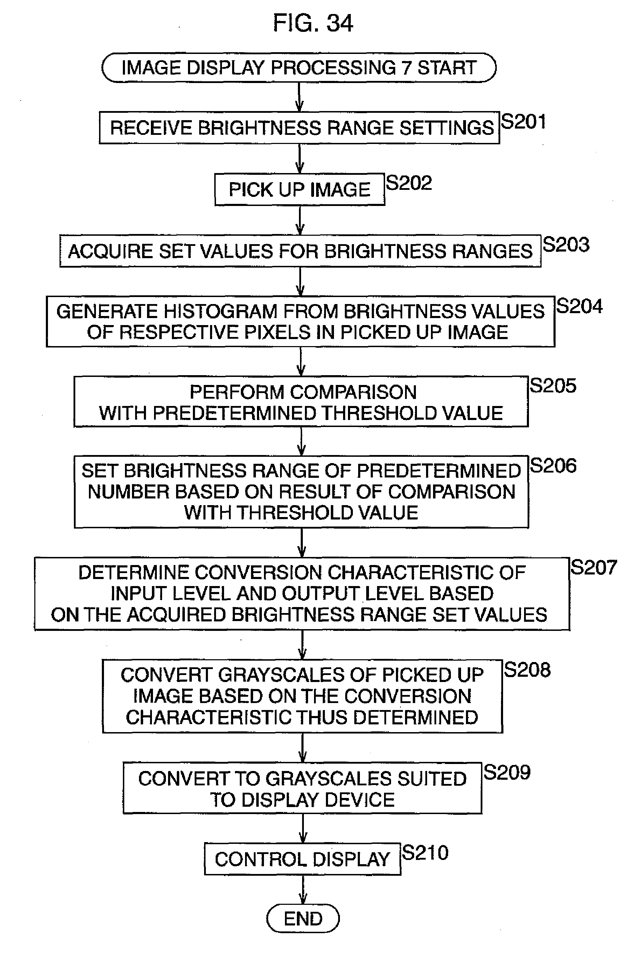

Image display processing 7 that is executed by the image processing apparatus 81 used by the image generation section 93-9 in Fig. 32 will be described next with reference to the flowchart in Fig. 34.

In step S201, the operation input section 92 receives an input of a set value for a plurality of brightness ranges from the user and supplies the input set values to the image generation section 93-9. The image generation section 93-9 acquires the picked up image signal.

In step S202, the image pickup section 91 picks up an image of a photographic obj ect and performs logarithmic conversion thereof on the basis of an operation input by the user that is supplied by the operation input section 92 and supplies the A/D converted image pickup image signal to the image generation section 93-9.

In step S203, the first brightness area brightness range setting section 281, secondbrightness area brightness range setting section 282, and third brightness area brightness range setting section 283 of the image generation section 93-9 acquire the set values of a plurality of brightness ranges supplied by the operation input section 92 and supply the set values to histogram analysis sections 251-1 to 251-3.

In step S204, the histogram analysis sections 251-1 to 251-3 generate and analyze histograms that represent the distribution of the brightness values of the first to third ranges of the picked up image as illustrated using Fig. 33 on the basis of the image signals supplied by the image pickup section 91, and supply the analysis result to the threshold value comparison processing sections 252-1 to 252-3.

In step S205, the thresholdvalue comparison processing sections 252-1 to 252-3 compare the number of pixels corresponding with the respective brightness values of the input signals with a predetermined threshold value on the basis of the analysis result of the histograms in the first to third ranges supplied by the histogram analysis sections 251-1 to 251-3. The threshold value comparison processing sections 252-1 to 252-3 supply, as a result of the comparison with the threshold value, the brightness values for which the number of pixels is judged to be equal to or more than the threshold value to the output level conversion processing section 187.

In step S206, the output level conversion processing section 187 sets the brightness range to which a large number of grayscale steps are allocated on the basis of the brightness values supplied by the threshold value comparisonprocessing sections 252-1 to 252-3.

In step S207, the output level conversion processing section 187 determines the conversion characteristic for the input level and output level described by using Figs. 6 and 7 or Fig. 15, for example.

In step S208, the output level conversion processing section 187 converts the grayscales of the picked up image supplied by the image pickup section 91 on the basis of the conversion characteristic determined in step S74 and supplies the converted grayscales to the display control section 94.

In step S209, the display control section 94 converts the supplied image signal into grayscales suited to a display device as described using Fig. 33, for example.

In step S210, the display control section 94 supplies the image signal converted to grayscales suited to the display device to the display 82 to control the image display, whereupon the processing is terminated.

Here, processing to display the generated image on the display 82 was described. However, in cases where the generated image is output to an external device (not shown) via the output control section 95, processing that is basically the same as that in steps S201 to step S208 is executed such that an image signal is supplied to the output control section 95 where the output is controlled by converting the image signal into grayscales that can be processed by the output destination device.

In cases where, as a result of such processing, for example, brightness areas of pixels corresponding with the image information required by the user varies with time according to some kind of pattern and, more specifically, in cases where, for the same brightness area, there is sometimes a lot of information during the daytime and barely any information in the evening, or a lot of information in the evening and at night but barely any information in the morning or during the daytime, even when all the brightness areas that may contain image information required by the user are preset, the prioritized allocation of the number of grayscale steps to brightness areas that do not have the required information can be avoided by performing histogram analysis and a comparison with the threshold value.

As was described hereinabove, in cases where image information required by the user exists over a wide brightness range in the image data that have been picked up by the image pickup section 91 that employs the logarithmic conversion-type image pickup device 102 in the image processing apparatus 81 used by the image generation sections 93-1 to 93-9, it is possible to generate image data that allow the information required by the user (the black objects in the dark or bright parts that exist in the same area as the dark parts, for example) to be displayed or printed out in a state where the information can be discriminated when the image is displayed using grayscales that correspond with the display 82 or output using grayscales that correspond with an external device constituting the output destination.

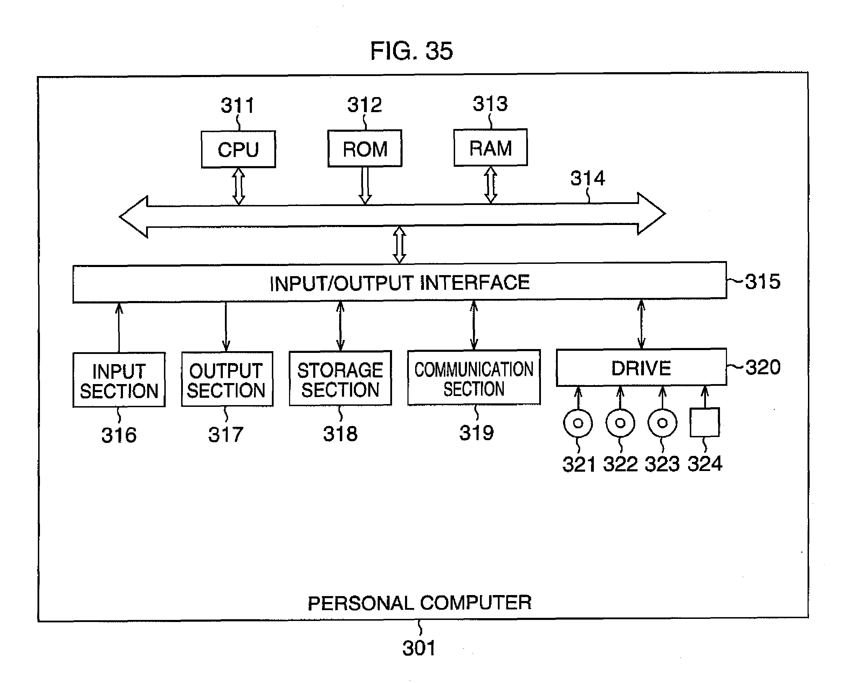

The serial processing can be executed by software. Such software is installed, from a recording medium, on a computer that is built into dedicated hardware or a general-purpose personal computer or the like, for example, which is capable of executing various functions as a result of installing various programs. In this case, for example, the whole of the image processing apparatus 81 described using Fig. 2 or a portion of the image processing apparatus 81 (the image generation section 93 and display control section 94, for example) is constituted by the personal computer 301 shown in Fig. 35.

In Fig. 35, a CPU (Central Processing Unit) 311 executes various processing in accordance with a program that is stored in a ROM (Read Only Memory) 312 or a program that is loaded from the storage section 318 to a RAM (Random Access Memory) 313. The required data and so forth are also suitably stored in the RAM 313 after the CPU 311 has executed the various processing;

The CPU 311, ROM 312, and RAM 313 are mutually connected via a bus 314. An I/O interface 315 is also connected to the bus 314.

An input section 316 comprising a keyboard and mouse or the like, an output section 317 comprising a display and speaker or the like, a storage section 318 constituted by a hard disk or the like, a communication section 319 constituted by a modem and a terminal adapter or the like are connected to the I/O interface 315. The communication section 319 performs communication processing via a network that includes the Internet.

A drive 320 is connected if necessary to the I/O interface 315 and a magnetic disk 331, optical disk 332, magneto-optical disk 333, or semiconductor memory 334 or the like are suitably mounted, and a computer program that is read from the magnetic disk 331, optical disk 332, magneto-optical disk 333, or semiconductor memory 334 is installed if necessary in the storage section 318.

In cases where serial processing is executed by means of software, the programs constituting the software are installed, from a network or recording medium, on a computer that is incorporated in dedicated hardware or a general-purpose personal computer or the like, for example, which is capable of executing various functions as a result of installing various programs.

As shown in Fig. 35, this recording medium is not constituted by package media constituted by magnetic disk 331 (including a floppy disk) in which programs are stored, optical disk 332 (including a CD-ROM (Compact Disk-Read Only Memory) or DVD (Digital Versatile Disk)), magneto-optical disk 333 (including MD (Mini-Disk) (trademark)), or semiconductor memory 334 or the like which are distributed in order to supply programs to the user separately from the main body of the device, but rather by ROM 312 in which programs are stored which is supplied to the user in a state of being pre-installed in the main body of the device, or a hard disk contained in the storage section 318.

In addition, in this specification, the steps describing the programs recorded on the recording medium include not only processing that is performed chronologically in the order in which the steps appear but also processing that is executed in parallel or individually but which is not necessarily processed chronologically.

Furthermore, it is understood that the present invention is applicable even in cases where the processing executed by one device in this specification is implemented by a plurality of devices.

## Claims

1. An image processing apparatus, comprising:
acquisition means for acquiring an image signal that is picked up by an image pickup device that outputs pixel values substantially proportional to a logarithm for an incident light amount;
brightness range setting means for setting a plurality of brightness ranges in the brightness range of the image signal acquired by the acquisition means; and
conversion means for converting the brightness of pixels contained in the image signal acquired by the acquisition means such that the allocation of the number of grayscale steps of the brightness differs for the brightness ranges set by the brightness range setting means and outside the brightness ranges.

2. The image processing apparatus according to claim 1, wherein the conversion means convert the brightness of pixels contained in the image signal acquired by the acquisition means such that a greater number of grayscales are allocated to the brightness ranges than outside the brightness ranges.

3. The image processing apparatus according to claim 1, wherein the brightness range setting means comprises:
first average value calculation means for calculating the average of the brightness values of the pixels contained in the image signal acquired by the acquisition means;
first brightness range setting means for setting a first brightness range based on the average value of the brightness value calculated by the first average value calculation means; and
second brightness range determination means for determining a second brightness range in a range that differs from the first brightness range set by the first brightness range setting means.

4. The image processing apparatus according to claim 3, wherein the second brightness range determination means further comprises:
second average value calculation means for calculating the average of the brightness values of pixels which have a higher brightness than the first brightness range and which are in a brightness range that differs from the first brightness range set by the first brightness range setting means; and
the second brightness range determination means determines the second brightness range on the basis of the average value calculated by the second average value calculation means.

5. The image processing apparatus according to claim 3, wherein the second brightness range determination means further comprises:
second average value calculation means for calculating the average of the brightness values of pixels which have a lower brightness than the first brightness range and which are in a brightness range that differs from the first brightness range set by the first brightness range setting means; and
the second brightness range determination means determines the second brightness range on the basis of the average value calculated by the second average value calculation means.

6. The image processing apparatus according to claim 3, wherein the brightness range setting means further comprises:
third brightness range determination means for determining a third brightness range in a range that differs from the first brightness range set by the first brightness range setting means and the second brightness range determined by the second brightness range determination means.

7. The image processing apparatus according to claim 1, wherein the brightness range setting means comprises:
extraction means for extracting pixels that are contained in a predetermined image area of the image signal from the pixel values acquired by the acquisition means;
first average value calculation means for calculating the average value of the brightness values of pixels contained in the predetermined image area of the image signal extracted by the extraction means;
first brightness range setting means for setting a first brightness range on the basis of the average value of the brightness values calculated by the first average value calculation means; and
second brightness range determination means for determining a second brightness range in a range that differs from the first brightness range set by the first brightness range setting means.

8. The image processing apparatus according to claim 7, wherein the second brightness range determination means further comprises:
second average value calculation means for calculating the average of the brightness values of pixels which have a higher brightness than the first brightness range and which are in a brightness range that differs from the first brightness range set by the first brightness range setting means; and
the second brightness range determination means determines the second brightness range on the basis of the average value calculated by the second average value calculation means.

9. The image processing apparatus according to claim 7, wherein the second brightness range determination means further comprises:
second average value calculation means for calculating the average of the brightness values of pixels which have a lower brightness than the first brightness range and which are in a brightness range that differs from the first brightness range set by the first brightness range setting means; and
the second brightness range determination means determines the second brightness range on the basis of the average value calculated by the second average value calculation means.

10. The image processing apparatus according to claim 7, wherein the brightness range setting means further comprises:
third brightness range determination means for determining a third brightness range in a range that differs from the first brightness range set by the first brightness range setting means and the second brightness range determined by the second brightness range determination means.

11. The image processing apparatus according to claim 1, wherein the brightness range setting means comprises:
histogram detection means for detecting a histogram that represents a distribution of brightness values of the pixels contained in the image signal acquired by the acquisition means; and
comparison means for comparing the number of pixels distributed in the respective brightness values with a predetermined threshold value, on the basis of the histogram detected by the histogram detection means; and
the brightness range setting means sets the plurality of brightness ranges on the basis of the result of the comparison by the comparison means.

12. The image processing apparatus according to claim 1, further comprising:
operation input means for receiving an operation input of a user,
wherein the brightness range setting means sets the plurality of brightness ranges on the basis of the operation input of the user that is input by means of the operation input means.

13. The image processing apparatus according to claim 1, further comprising:
operation input means for receiving an operation input of a user,
wherein the brightness range setting means comprises:
brightness range settable area setting means for setting a plurality of brightness range settable areas on the basis of the operation input of the user that is input by means of the operation input means;
histogram detection means for detecting a histogram that represents a distribution of brightness values of the pixels contained in the brightness range settable areas set by the brightness range settable area setting means; and
comparison means for comparing the number of pixels distributed in the respective brightness values with a predetermined threshold value, on the basis of the histogram detected by the histogram detection means, and
wherein the brightness range setting means sets the plurality of brightness ranges on the basis of the result of the comparison by the comparison means.

14. The image processing apparatus according to claim 1, wherein the image signal is picked up by means of a logarithmic conversion-type image pickup device that outputs pixel values substantially proportional to a logarithm for the incident light amount by utilizing a semiconductor sub-threshold characteristic.

15. The image processing apparatus according to claim 1, wherein the conversion means sets a conversion characteristic such that the number of grayscale steps is not allocated outside the brightness ranges set by the brightness range setting means.

16. The image processing apparatus according to claim 1, wherein the conversion means sets an intermediate area that is close to the boundary between the brightness ranges set by the brightness range setting means and sets a conversion characteristic such that:
the greatest number of grayscale steps is allocated to a part excluding the intermediate area of the brightness ranges set by the brightness range setting means;
the second largest number of grayscale steps is allocated to the intermediate area; and
the smallest number of grayscale steps is allocated to a part which is other than the intermediate area and which is outside the brightness ranges set by the brightness range setting means.

17. The image processing apparatus according to claim 16, wherein the conversion means sets a conversion characteristic such that the number of grayscale steps is not allocated to a part which is other than the intermediate area and which is outside the brightness ranges set by the brightness range setting means.

18. An image processing method for an image processing apparatus that processes an image signal that is picked up by an image pickup device that outputs pixel values substantially proportional to a logarithm for an incident light amount, comprising:
an acquisition step of acquiring the image signal;
a brightness range setting step of setting a plurality of brightness ranges in the brightness range of the image signal acquired by the processing in the acquisition step; and
a conversion step of converting the brightness of the pixels contained in the image signal acquired by the processing in the acquisition step such that the allocation of the number of grayscale steps of the brightness differs for the brightness ranges set by the processing in the brightness range setting step and outside the brightness ranges.

19. A program for causing a computer to execute processing of an image signal that is picked up by an image pickup device that outputs pixels values substantially proportional to a logarithm for an incident light amount, the processing comprising:
an acquisition control step of controlling the acquisition of the image signal;
a brightness range setting step of setting a plurality of brightness ranges in the brightness range of the image signal the acquisition of which is controlled by the processing in the acquisition control step; and
a conversion step of converting the brightness of pixels contained in the image signal the acquisition of which is controlled by the processing in the acquisition control step such that the allocation of the number of grayscale steps of the brightness differs for the brightness ranges set by the processing in the brightness range setting step and outside the brightness ranges.

20. A recording medium on which the program according to claim 19 is recorded.
